# EUROPEAN PATENT APPLICATION

(11) **EP 4 325 244 A1**
(43) Date of publication of application: **21.02.2024**
(21) Application number: 22787839.4
(22) Date of filing: 15.02.2022
(51) Int. Cl.: G01S 7/481, G01S 7/497, G01S 17/34, G01C 3/00, G01C 3/06

(54) **DEVICE AND METHOD FOR MEASURING DISTANCE AND/OR SPEED OF OBJECT**

(30) Priority: 15.04.2021 JP 2021069037
(71) Applicant: Panasonic Intellectual Property Management Co., Ltd., Kadoma-shi, Osaka 571-0057 (JP)
(72) Inventor: HASHIYA Akira, Kadoma-shi, Osaka 571-0057 (JP); KATO Yumiko, Kadoma-shi, Osaka 571-0057 (JP); HISADA Kazuya, Kadoma-shi, Osaka 571-0057 (JP); INADA Yasuhisa, Kadoma-shi, Osaka 571-0057 (JP)
(74) Representative: Grünecker Patent- und Rechtsanwälte PartG mbB
(86) International application number: PCT/JP2022/005825
(87) International publication number: WO 2022/219911

(57) **Abstract**

A measurement apparatus includes a light source, a calibrating optical system, an interference optical system, a photosensitive device, a storage device, and a processing circuit. The interference optical system separates the light emitted from the light source into reference light and output light and generates first interfering light and second interfering light. The first interfering light is interfering light resulting from interference between reflected light produced by the output light being reflected off a physical object and the reference light. The second interfering light is interfering light resulting from interference between reflected light produced by the output light being reflected off the calibrating optical system and the reference light. The photosensitive device outputs a first detection signal corresponding to an intensity of the first interfering light and a second detection signal corresponding to an intensity of the second interfering light. The processing circuit sends out, to the light source, a control signal that sweeps a frequency of the light that is emitted from the light source, updates, on the basis of the second detection signal, the correcting data stored in the storage device, and generates measurement data on the basis of the correcting data thus updated and the first detection signal.

## Description

### Technical Field

The present disclosure relates to an apparatus and a method for measuring the distance to and/or the velocity of a physical object.

### Background Art

A ranging apparatus based on an FMCW (frequency modulated continuous wave) technique sends out frequency-modulated electromagnetic waves and measures distance on the basis of a difference in frequency between transmitted waves and reflected waves. In a case where the electromagnetic waves used are radio waves such as millimeter waves, the FMCW ranging apparatus is called "FMCW radar". The FMCW radar uses, for example, a voltage-controlled oscillator (VCO) as an oscillating source of radio waves. In a case where the electromagnetic waves are light such as visible light or infrared light, the FMCW ranging apparatus is called "FMCW LiDAR". The FMCW LiDAR uses, for example, a laser light source as a light source.

The FMCW LiDAR emits periodically frequency-modulated light from the light source toward a physical object and obtains interfering light by effecting interference between reflected light from the physical object and reference light from the light source. The interfering light is detected by a photodetector and converted into an electric signal. This electrical signal includes a signal component of a frequency equivalent to a difference between the frequency of the reflected light and the frequency of the reference light. This signal component is called "beat signal". The frequency of the beat signal is called "beat frequency". There is a correlation between the beat frequency and the distance to the physical object. Accordingly, the distance to the physical object can be calculated on the basis of the beat frequency. Furthermore, the velocity of the physical object can be calculated too through the utilization of a Doppler shift for the reflected light from the physical object as the physical object moves. For example, the velocity of the physical object can be calculated on the basis of a difference in frequency between a beat signal in an up-chirp period during which the frequency of light that is emitted from the light source increases and a beat signal in a down-chirp period during which the frequency of light that is emitted from the light source decreases.

Unlike a TOF (time-of-flight) LiDAR, the FMCW LiDAR has such a feature that a result of ranging is insusceptible to disturbance light, as the FMCW LiDAR detects the frequency of an electrical signal outputted from the photodetector. On the other hand, it has been considered that the precision of distance measurement by the FMCW LiDAR depends on how linearly the frequency of light can be modulated with respect to time.

PTL 1 states that even in a case where a voltage-controlled oscillator of an FMCW radar has linearly swept a voltage with respect to time, there is a decrease in ranging performance due to a nonlinear change in frequency. In order to solve this problem, PTL 1 discloses a method for dynamically changing the timing of sampling of an interfering signal on the basis of a sweep signal that is obtained from an artificial target. PTL 1 states that this method makes it possible to compensate for the nonlinearity of a frequency sweep.

PTL 2 discloses an FMCW radar apparatus for correcting the frequency of an interfering signal using correction data corresponding to a plurality of distances and a plurality of ambient temperatures. PTL 2 states that this apparatus makes it possible to improve detection accuracy.

PTL 3 discloses an example of an FMCW LiDAR apparatus that continuously measures the frequencies of beat signals and calculates the distance to a physical object on the basis of the average of the frequencies thus measured. PTL 3 states that this apparatus eliminates the effect of a nonlinear chirp of a laser and makes accurate distance measurement possible.

PTL 4 discloses an ophthalmic apparatus that is used for identifying the location of a site to be measured inside an eye of a human. This ophthalmic apparatus includes a measurement optical system, a reference optical system, a calibration optical system, a photosensitive element, and an arithmetic device. The measurement optical system irradiates the interior of the subject's eye with light from a light source and guides the resulting reflected light. The reference optical system guides the light from the light source as reference light. The calibration optical system guides the light from the light source. The photosensitive element receives measuring interfering light resulting from a combination of the reflected light guided by the measurement optical system and the reference light guided by the reference optical system and calibrating interfering light resulting from a combination of calibration light guided by the calibration optical system and the reference light guided by the reference optical system. The arithmetic device identifies the location of the site to be measured inside the subject's eye from the measuring interfering light and the calibrating measurement light received by the photosensitive element. PTL 4 states that such a configuration makes it possible to accurately identify the location of the site to be measured inside the subject's eye even if the properties of interfering light change with passage of time.

### Citation List

### Patent Literature

PTL 1: International Publication No. 2006/035199
PTL 2: Japanese Unexamined Patent Application Publication No. 2014-185973
PTL 3: Japanese Unexamined Patent Application Publication No. 2019-45200
PTL 4: Japanese Unexamined Patent Application Publication No. 2013-180111

### Summary of Invention

### Technical Problem

The present disclosure provides a technology that makes it possible to, in a measurement apparatus that utilizes the FMCW technique, reduce deterioration of the precision of measurement of distance and/or velocity even if the output characteristics of a light source change due to passage of time, changes in usage environment, changes in operating state of the light source, or other factors.

### Solution to Problem

A measurement apparatus according to an aspect of the present disclosure includes a light source, a calibrating optical system, an interference optical system, a photosensitive device, a storage device, and a processing circuit. The light source emits frequency-modulated light. The calibrating optical system has at least one reflecting surface. The interference optical system separates the light emitted from the light source into reference light and output light and generates first interfering light and second interfering light. The first interfering light is interfering light resulting from interference between reflected light produced by the output light being reflected off a physical object and the reference light. The second interfering light is interfering light resulting from interference between reflected light produced by the output light being reflected off the calibrating optical system and the reference light. The photosensitive device includes at least one photodetector and outputs a first detection signal corresponding to an intensity of the first interfering light and a second detection signal corresponding to an intensity of the second interfering light. The storage device stores correcting data for use in correction of the first detection signal. The processing circuit sends out, to the light source, a control signal that sweeps a frequency of the light that is emitted from the light source, updates the correcting data on the basis of the second detection signal, corrects the first detection signal on the basis of the correcting data thus updated, generates measurement data on a distance to and/or a velocity of the physical object on the basis of the first detection signal thus corrected, and outputs the measurement data.

It should be noted that general or specific embodiments of the present disclosure may be implemented as a system, an apparatus, a method, an integrated circuit, a computer program, a computer-readable storage medium such as a storage disk, or any selective combination thereof. The computer-readable storage medium may include a volatile storage medium or may include a nonvolatile storage medium such as a CD-ROM (compact disc read-only memory). The apparatus may be constituted by one or more apparatuses. In a case where the apparatus is constituted by two or more apparatuses, the two or more apparatuses may be placed in one piece of equipment or may be separately placed in two or more separate pieces of equipment. The term "apparatus" herein or in the claims may not only mean one apparatus but also mean a system composed of a plurality of apparatuses.

### Advantageous Effects of Invention

An embodiment of the present disclosure makes it possible to reduce deterioration of the precision of measurement of distance and/or velocity even if the output characteristics of a light source change due to passage of time, changes in usage environment, changes in operating state of the light source, or other factors.

### Brief Description of Drawings

[Fig. 1] Fig. 1 is a diagram showing data obtained through an experiment conducted by the inventors.
[Fig. 2] Fig. 2 is a block diagram schematically showing a configuration of a measurement apparatus according to an exemplary embodiment.
[Fig. 3] Fig. 3 is a block diagram showing configuration examples of a light source and an interference optical system.
[Fig. 4] Fig. 4 is a diagram showing examples of a control signal that is outputted from a processing circuit and a driving current signal that is outputted from a driving circuit.
[Fig. 5A] Fig. 5A is a diagram showing an example of a calibrating optical system.
[Fig. 5B] Fig. 5B is a diagram showing another example of a calibrating optical system.
[Fig. 5C] Fig. 5C is a diagram showing still another example of a calibrating optical system.
[Fig. 6] Fig. 6 is a block diagram showing a configuration example of a measurement apparatus whose interference optical system is a fiber optical system.
[Fig. 7] Fig. 7 is a block diagram showing an example of a measurement apparatus including an optical deflector.
[Fig. 8A] Fig. 8A is a diagram schematically showing examples of time changes in frequency of reference light and reflected light in a case where a physical object is at rest.
[Fig. 8B] Fig. 8B is a diagram schematically showing examples of time changes in frequency of reference light and reflected light in a case where a physical object is approaching the measurement apparatus 100.
[Fig. 9] Fig. 9 is a flow chart showing an example of an operation of calibration.
[Fig. 10A] Fig. 10A is a graph showing an example of a result of analysis of the period of a detection signal.
[Fig. 10B] Fig. 10B is a diagram showing an example of a relationship between control signal voltage and period.
[Fig. 11A] Fig. 11A shows an example of a correction table associated with a first operating state of the light source.
[Fig. 11B] Fig. 11B shows an example of a correction table associated with a second operating state of the light source.
[Fig. 12] Fig. 12 is a diagram showing examples of the waveforms of uncorrected and corrected detection signals.
[Fig. 13] Fig. 13 is a diagram showing an example of a conversion table that defines a relationship between the frequency of a beat signal and distance.
[Fig. 14A] Fig. 14A is a diagram showing an example of a conversion table that defines a relationship between the frequency of a beat signal and distance in correspondence with the first operating state.
[Fig. 14B] Fig. 14B is a diagram showing an example of a conversion table that defines a relationship between the frequency of a beat signal and distance in correspondence with the second operating state.
[Fig. 15] Fig. 15 is a flow chart showing an example of a distance measuring operation.
[Fig. 16] Fig. 16 is a block diagram schematically showing a configuration of a measurement apparatus according to another embodiment.
[Fig. 17] Fig. 17 is a block diagram schematically showing a configuration of a measurement apparatus according to still another embodiment.
[Fig. 18] Fig. 18 is a block diagram schematically showing a configuration of a measurement apparatus according to still another embodiment.
[Fig. 19A] Fig. 19A is a diagram showing an example of a correction table that defines a relationship between the voltage of a control signal and sampling interval.
[Fig. 19B] Fig. 19B is a diagram showing an example of a correction table that defines a relationship between phase of frequency modulation and periodic ratio.
[Fig. 19C] Fig. 19C is a diagram showing an example of a correction table that defines a relationship between phase of frequency modulation and sampling interval.
[Fig. 20] Fig. 20 is a block diagram schematically showing a configuration of a measurement apparatus according to another embodiment.
[Fig. 21] Fig. 21 is a block diagram schematically showing a configuration of a measurement apparatus according to a first modification of the embodiment of the present disclosure.
[Fig. 22] Fig. 22 is a block diagram schematically showing a configuration of a measurement apparatus according to a second modification of the embodiment of the present disclosure.
[Fig. 23] Fig. 23 is a flow chart showing a calibration operation of a measurement apparatus according to a third modification of the embodiment of the present disclosure.
[Fig. 24] Fig. 24 is a flow chart showing a calibration operation of a measurement apparatus according to a fourth modification of the embodiment of the present disclosure. Description of Embodiments

### (Underlying Knowledge Forming Basis of the Present Disclosure)

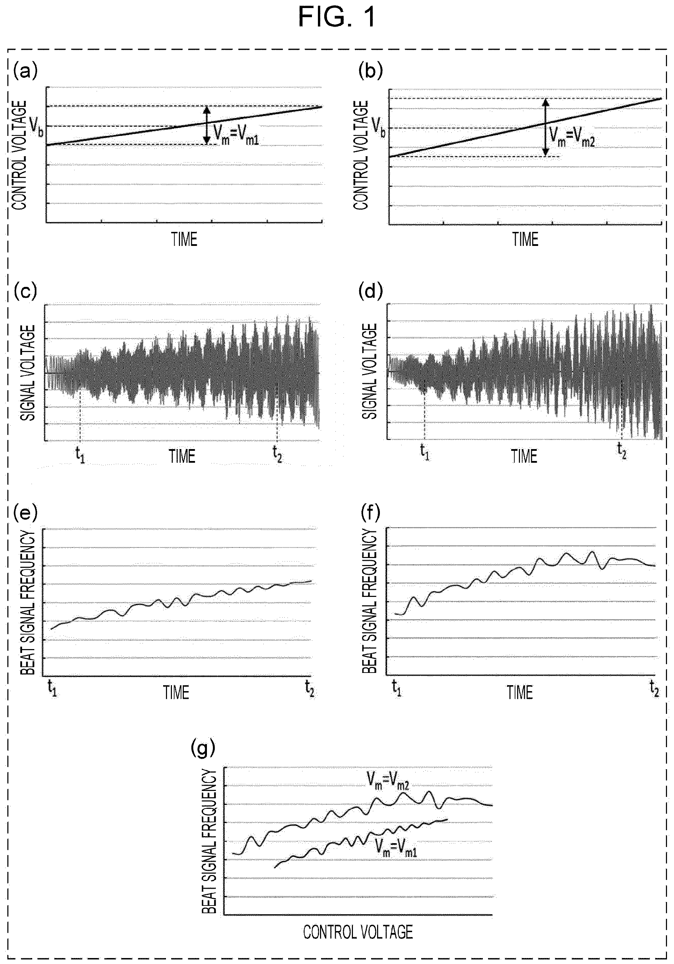

The inventors found the following phenomenon in the waveform of a detection signal that is obtained by an FMCW LiDAR detecting interfering light. Even if the control voltage of a light source is linearly swept for the purpose of linear modulation of the frequency of light, the frequency linearly changes; however, the nonlinearity may change due to various factors such as changes in operating state of the light source, changes in usage environment, and passage of time. The following explains this phenomenon with reference to Fig. 1.

Fig. 1 is a diagram showing examples of data obtained through an experiment conducted by the inventors. In this experiment, laser light was emitted from a semiconductor laser light source placed at a quiescent point toward a reflective plate that was a physical object at rest. The voltage (hereinafter also referred to as "control voltage") of a control signal that is inputted to the light source was linearly swept in a predetermined voltage range Vm (hereinafter also referred to as "modulation voltage amplitude") and with predetermined periodicity, whereby periodically frequency-modulated laser light was emitted from the light source. An interference optical system was used to effect interference between reflected light from the reflecting plate and the emitted light from the light source. Interfering light was detected with a photodetector. Obtained signals were recorded.

Graph (a) in Fig. 1 shows an example of a time change in voltage of a control signal that is inputted to the light source. In this example, the control signal is linearly swept with respect to time in a voltage range Vₘ₁. The median (hereinafter also referred to as "bias voltage") in the voltage range is V_{b}. Graph (b) of Fig. 1 shows an example of a time change in control voltage in a case where the same laser light source is controlled under the same temperature conditions and with a different control signal. In this example, the bias voltage is V_{b} as in the example of (a), and the modulation voltage amplitude is Vₘ₂. Vm₂ is 1.5 times greater than Vₘ₁.

Graphs (c) and (d) in Fig. 1 each show an example of the waveform of an electric signal (hereinafter also referred to as "detection signal") obtained by detecting interfering light resulting from interference between reflected light produced in a case where laser light was emitted from the light source toward the reflecting plate at rest and reference light traveling from the light source toward the photodetector via an optical system. Graph (c) shows the waveform of a detection signal in a case where the modulation voltage amplitude is Vₘ₁, and graph (d) shows the waveform of a detection signal in a case where the modulation voltage amplitude is Vₘ₂. The time axes in these graphs are identical to the time axes in graphs (a) and (b). Graphs (a) to (d) each represent a change in a signal corresponding to one period of the control voltage. The period of the control voltage is hereinafter sometimes referred to as "modulation period".

Graph (e) in Fig. 1 shows a time change in instantaneous frequency of a beat signal as obtained by conducting a frequency analysis of the signal waveform of graph (c), and graph (f) in Fig. 1 shows a time change in instantaneous frequency of a beat signal as obtained by conducting a frequency analysis of the signal waveform of graph (d). The waveform of graph (e) was obtained on the basis of signal voltage in a range from a time t₁ to a time t₂ in graph (c), and the waveform of graph (f) was obtained on the basis of signal voltage in a range from a time t₁ to a time t₂ in graph (d).

Graph (g) in Fig. 1 is a graph obtained by plotting, as a function of control signal voltage, the instantaneous frequencies corresponding to the aforementioned two modulation voltage amplitudes Vₘ₁ and Vₘ₂.

In the present experiment, the physical object at rest was irradiated with light; therefore, if the frequency of the light too was linearly swept in correspondence with the linear sweep of the control voltage, the frequency of a beat signal should be constant regardless of time. However, as shown in graphs (e) and (f) of Fig. 1, the frequency of a beat signal temporally fluctuates. Further, there is a difference between the nonlinearity of the frequency of the beat signal with respect to time in the case where the modulation voltage amplitude is Vₘ₁ and the nonlinearity of the frequency of the beat signal with respect to time in the case where the modulation voltage amplitude is Vₘ₂. This indicates that the nonlinearity of the frequency of light with respect to time varies according to the magnitude of modulation voltage amplitude.

Furthermore, as can be seen from graph (g) of Fig. 1, even in a case where the frequencies of the beat signals are plotted as a function of control signal voltage, there is a difference between the nonlinearity of fluctuations in frequency of the beat signal in the case where the modulation current amplitude is Vₘ₁ and the nonlinearity of fluctuations in frequency of the beat signal in the case where the modulation voltage amplitude is Vₘ₂. For example, in the example in which the modulation current amplitude is Vₘ₁, the frequency of the beat signal tends to relatively increase as the control voltage increases toward a high-voltage side; on the other hand, in the example in which the modulation current amplitude is Vₘ₂, the control voltage tends to become saturated on the same high-voltage side. This indicates that even if a particular control voltage is applied to the laser light source at a certain moment, the frequency of light that is emitted from the laser light source does not necessarily become constant but fluctuates depending on the modulation voltage amplitude of a control signal. It is considered that such a phenomenon occurs for the following reason. Depending on the magnitude of modulation voltage amplitude, there is a difference in the way of temporal change of heat that a current that drives the laser element gives to the laser element. It is considered that this difference in the way of changing affects temporal changes in resonant length, gain curve, and oscillation mode of the laser element and brings a difference to fluctuations in oscillating frequency of the laser.

Such fluctuations in beat frequency with respect to control voltage or time make it impossible to uniquely determine the distance to the physical object. A similar phenomenon may occur also in a case where the characteristics of the light source have changed due to various factors such as changes in usage environment such as temperature or humidity, passage of time, or vibrations. Even if the characteristics of the light source change, reducing deterioration of measurement precision is required.

In order to solve the aforementioned problems, the inventors conceived of configurations of embodiments of the present disclosure as described below. The following describes an exemplary embodiment of the present disclosure.

A measurement apparatus according to an embodiment of the present disclosure includes a light source, a calibrating optical system, an interference optical system, a photosensitive device, a storage device, and a processing circuit. The light source emits frequency-modulated light. The calibrating optical system has at least one reflecting surface. The interference optical system separates the light emitted from the light source into reference light and output light and generates first interfering light and second interfering light. The first interfering light is interfering light resulting from interference between reflected light produced by the output light being reflected off a physical object and the reference light. The second interfering light is interfering light resulting from interference between reflected light produced by the output light being reflected off the calibrating optical system and the reference light. The photosensitive device includes at least one photodetector and outputs a first detection signal corresponding to an intensity of the first interfering light and a second detection signal corresponding to an intensity of the second interfering light. The storage device stores correcting data for use in correction of the first detection signal. The processing circuit sends out, to the light source, a control signal that sweeps a frequency of the light that is emitted from the light source, updates the correcting data on the basis of the second detection signal, corrects the first detection signal on the basis of the correcting data thus updated, generates measurement data on a distance to and/or a velocity of the physical object on the basis of the first detection signal thus corrected, and outputs the measurement data.

According to the foregoing configuration, the processing circuit can update the correcting data on the basis of a result of measurement of the second interfering light using the calibrating optical system and appropriately correct the first detection signal on the basis of the correcting data thus updated. This makes it possible to measure the distance and/or the velocity with high precision even if the output characteristics of the light source change due to aged deterioration, changes in usage environment, changes in operating state of the light source, or other factors.

The correcting data may be created, for example, by a calibration that a manufacturer of the measurement apparatus performs before shipment and stored in the storage device. The operation of updating the correcting data is carried out by a user of the measurement apparatus. The user can cause the measurement apparatus to execute an operation for updating of the correcting data before carrying out a measurement or at a given timing during the measurement. The updating of the correcting data may be an operation of modifying and overwriting existing correcting data, an operation of overwriting existing correcting data with new correcting data, or an operation of storing new correcting data while leaving existing correcting data. Further, in a case where there is no existing correcting data in the storage device, the correcting data may be updated by newly creating correcting data. The operation of newly creating correcting data may be executed during a calibration that the manufacturer of the measurement apparatus performs before shipment. For convenience, such an operation of newly creating correcting data too is herein called "updating" of the correcting data.

The interference optical system may include an optical switch that switches between a first state in which to emit the output light to the physical object and a second state in which to emit the output light to the calibrating optical system. The processing circuit may operate in a measurement mode of measuring the distance to and/or the velocity of the physical object and a calibration mode of updating the correcting data. In the measurement mode, the processing circuit may put the optical switch into the first state, correct the first detection signal on the basis of the correcting data, and generate the measurement data on the basis of the first detection signal thus corrected. In the calibration mode, the processing circuit may put the optical switch into the second state and update the correcting data on the basis of the second detection signal.

According to the foregoing configuration, switching between the measurement mode and the calibration mode makes it possible to update the correcting data and measure the distance and/or the velocity with a common optical system and a common photodetector. This makes it possible to reduce the size of the measurement apparatus and reduce the manufacturing cost of the measurement apparatus.

The measurement apparatus may further include a time counter that measures a duration of use of the light source. The processing circuit may switch between the measurement mode and the calibration mode on the basis of the duration of use of the light source. For example, the processing circuit may switch from the measurement mode to the calibration mode in a case where the duration of use of the light source since a point of time at which the correcting data was previously updated has exceeded a certain threshold. This makes it possible to, in a case where the duration of use of the light source lengthens, automatically switch to the calibration mode at an appropriate timing and update the correcting data. This results in making it possible to reduce deterioration of measurement precision due to the lengthening of the duration of use of the light source.

The measurement apparatus may further include a temperature sensor that measures a temperature of the light source. The processing circuit may switch between the measurement mode and the calibration mode on the basis of the temperature of the light source. For example, the processing circuit may switch from the measurement mode to the calibration mode in a case where the temperature thus measured of the light source is out of a predetermined range. The predetermined range may for example be set to be a range including a temperature at which the correcting data was created or previously updated. The processing circuit may switch from the measurement mode to the calibration mode in a case where the temperature thus measured of the light source falls below or exceeds a threshold. Such a configuration makes it possible to, even in a case where the characteristics of the light source have changed due to a change in temperature of the light source, reduce deterioration of measurement precision by appropriately modifying the correcting data.

The processing circuit may switch between the measurement mode and the calibration mode in response to input from a user. For example, the processing circuit may switch from the measurement mode to the calibration mode in a case where the user has performed, with use of an input device built in or connected to the measurement apparatus, an operation of giving an instruction to start the calibration mode. This allows the user to update the correcting data at a given timing.

When, in the measurement mode, the processing circuit has changed an operating state of the light source by changing the control signal, the processing circuit may switch to the calibration mode. For example, the processing circuit may switch to the calibration mode in a case where the processing circuit has changed a measurable distance range by changing the amplitude of a control voltage that is applied to the light source. This makes it possible to soften the effects of non-linear frequency modulation that occurs differently according to the operating state of the light source, making it possible to more precisely measure the distance and/or the velocity.

The storage device may further store a reference distance corresponding to an optical path length of the calibrating optical system. The processing circuit may update the correcting data on the basis of the second detection signal and the reference distance. The reference distance may for example be an optical distance from the light source to a particular reflecting surface of the calibrating optical system. The processing circuit can create, as updated correcting data, correcting data for correcting the second detection signal so that a distance that is theoretically derived from the frequency of the second detection signal matches the reference distance.

The measurement apparatus may have a measurable distance range set therefor. The reference distance may fall within the distance range. For example, in a case where the measurable distance range is from 0 m to 100 m, the reference distance may be set within the range, e.g., at a distance such as 50 m. By thus setting the reference distance at distant that is close to a distance that is actually measured, the correcting data can be more appropriately corrected.

The interference optical system may include an optical fiber, a mirror, or a multipath cell. Using an interference optical system including these optical elements makes it easy to secure a relatively long optical path length, making it possible to improve the quality of calibration.

The correcting data may contain information on correction values corresponding separately to each of a plurality of voltage values or a plurality of current values of the control signal. The correction values may for example be coefficients for correcting the periods of the detection signals. The processing circuit can correct the detection signals by determining the periods from the detection signals and multiplying the periods by the correction values.

The correcting data may contain information on correction values corresponding separately to each of a plurality of phases or a plurality of timings of frequency modulation by the control signal. On the basis of such correcting data containing information on correction values, the processing circuit can appropriately correct the detection signals.

The correcting data may contain information on correction values for changing sampling timings at which the processing circuit samples the detection signals. By determining the timings of sampling of the detection signals in accordance with the correction values, the processing circuit can correct the detection signals.

The correcting data may be data representing a correction table or a correction function for determining correction values for use in correction of the detection signals. The processing circuit can appropriately correct the detection signals on the basis of the correction values determined on the basis of the correction table or the correction function.

A method according to another embodiment of the present disclosure is executed by a computer in a system including a measurement apparatus. The measurement apparatus includes a light source that emits periodically frequency-modulated light, a calibrating optical system having at least one reflecting surface, an interference optical system that separates the light emitted from the light source into reference light and output light and generates first interfering light and second interfering light, the first interfering light being interfering light resulting from interference between reflected light produced by the output light being reflected off a physical object and the reference light, the second interfering light being interfering light resulting from interference between reflected light produced by the output light being reflected off the calibrating optical system and the reference light, a photosensitive device that outputs a first detection signal corresponding to an intensity of the first interfering light and a second detection signal corresponding to an intensity of the second interfering light, the photosensitive device including at least one photodetector, and a storage device that stores correcting data for use in correction of the first detection signal. The method includes updating the correcting data on the basis of the second detection signal, correcting the first detection signal on the basis of the correcting data thus updated, generating measurement data on a distance to and/or a velocity of the physical object on the basis of the first detection signal thus corrected, and outputting the measurement data.

A computer program according to still another embodiment of the present disclosure is executed by a computer in a system including a measurement apparatus. The computer program is stored in a computer-readable non-transient storage medium. The measurement apparatus includes a light source that emits periodically frequency-modulated light, a calibrating optical system having at least one reflecting surface, an interference optical system that separates the light emitted from the light source into reference light and output light and generates first interfering light and second interfering light, the first interfering light being interfering light resulting from interference between reflected light produced by the output light being reflected off a physical object and the reference light, the second interfering light being interfering light resulting from interference between reflected light produced by the output light being reflected off the calibrating optical system and the reference light, a photosensitive device that outputs a first detection signal corresponding to an intensity of the first interfering light and a second detection signal corresponding to an intensity of the second interfering light, the photosensitive device including at least one photodetector, and a storage device that stores correcting data for use in correction of the first detection signal. The computer program causes the computer to execute operations including updating the correcting data on the basis of the second detection signal, correcting the first detection signal on the basis of the correcting data thus updated, generating measurement data on a distance to and/or a velocity of the physical object on the basis of the first detection signal thus corrected, and outputting the measurement data.

In the present disclosure, all or some of the circuits, units, apparatuses, members, or sections or all or some of the functional blocks in the block diagrams may be implemented as one or more of electronic circuits including, but not limited to, a semiconductor device, a semiconductor integrated circuit (IC), or an LSI (large scale integration). The LSI or IC can be integrated into one chip, or also can be a combination of multiple chips. For example, functional blocks other than a memory may be integrated into one chip. The name used here is LSI or IC, but it may also be called system LSI, VLSI (very large scale integration), or ULSI (ultra large scale integration) depending on the degree of integration. A Field Programmable Gate Array (FPGA) that can be programmed after manufacturing an LSI or a reconfigurable logic device that allows reconfiguration of the connection or setup of circuit cells inside the LSI can be used for the same purpose.

Further, it is also possible that all or some of the functions or operations of the circuits, units, apparatuses, members, or sections are implemented by executing software. In such a case, the software is stored on one or more non-transitory storage media such as a ROM, an optical disk, or a hard disk drive, and when the software is executed by a processor, the software causes the processor together with peripheral devices to execute the functions specified in the software. A system or an apparatus may include such one or more non-transitory storage media on which the software is stored and a processor together with necessary hardware devices such as an interface.

The following describes embodiments of the present disclosure in more detail. It should be noted that the embodiments to be described below illustrate general or specific examples. The numerical values, shapes, constituent elements, placement and topology of constituent elements, steps, orders of steps, or other features that are shown in the following embodiments are merely examples and are not intended to limit the present disclosure. Further, those of the constituent elements in the following embodiments which are not recited in an independent claim representing the most generic concept are described as optional constituent elements. Further, the drawings are schematic views and are not necessarily strict illustrations. Furthermore, in the drawings, substantially identical or similar components are given identical or similar reference signs, and a repeated description may be omitted or simplified.

### (Embodiments)

A measurement apparatus according to an exemplary embodiment of the present disclosure is described. The measurement apparatus of the present embodiment is a ranging apparatus that measures the distance to a physical object using an FMCW-LiDAR technique. The measurement apparatus may measure the velocity of the physical object in addition to or instead of the distance. The measurement apparatus may be mounted on a movable body such as a self-guided vehicle, an automated guided vehicle (AGV), an unmanned aerial vehicle (UAV), or a mobile robot. The measurement apparatus may be mounted for use on any piece of equipment as well as a movable body.

### <Configuration>

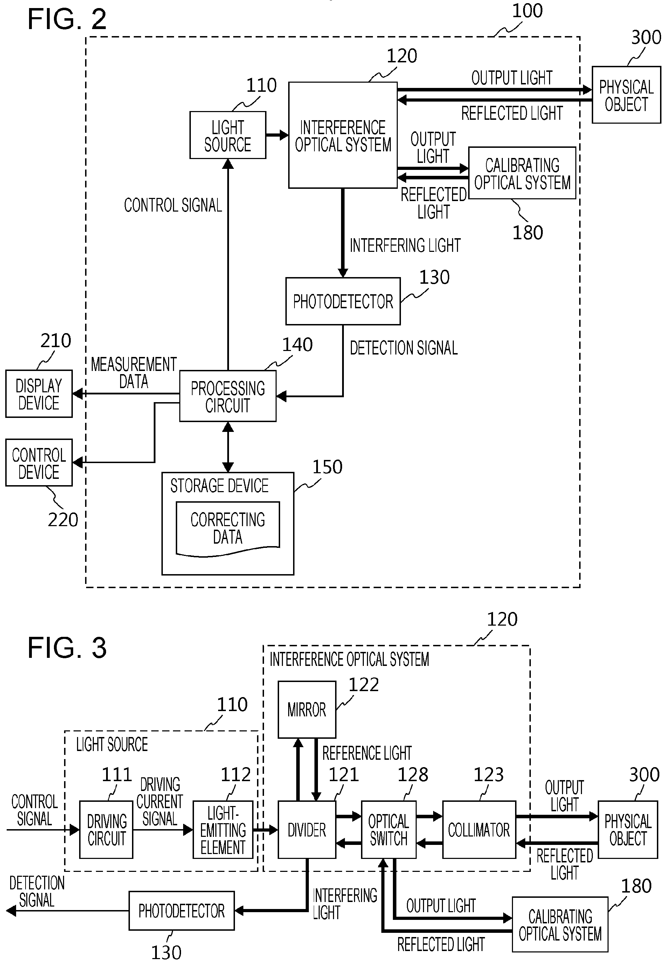

Fig. 2 is a block diagram schematically showing a configuration of a measurement apparatus 100 according to the present embodiment. In Fig. 2, the thick arrows indicate the flow of light, and the thin arrows indicate the flow of signals or data. Fig. 2 also shows a physical object 300 the distance to which and/or the velocity of which is/are to be measured, a display device 210 that is connected to the measurement apparatus 100, and a control device 220 that is connected to the measurement apparatus 100. The physical object 300 is any object such as an obstacle, a person, or a movable body (e.g., an automobile, a two-wheeled vehicle, a mobile robot, or a drone).

As shown in Fig. 2, the measurement apparatus 100 includes a light source 110, an interference optical system 120, a photodetector 130, a processing circuit 140, a storage device 150, and a calibrating optical system 180. The light source 110 can change, in response to a control signal outputted from the processing circuit 140, the frequency of light that the light source 110 emits. The interference optical system 120 separates the emitted light from the light source 110 into reference light and output light and generates interfering light by effecting interference between reflected light produced by the output light being reflected by the physical object 300 or the calibrating optical system 180 and the reference light. Interfering light resulting from interference between the reflected light produced by being reflected by the physical object 300 and the reference light is referred to as "first interfering light". Interfering light resulting from interference between the reflected light produced by being reflected by the calibrating optical system 180 and the reference light is referred to as "second interfering light". These rays of interfering light fall on the photodetector 130. The calibrating optical system 180 is used in a calibration operation of updating correcting data stored in the storage device 150. The calibrating optical system 180 includes one or more optical elements each having at least one reflecting surface. Detailed configurations of the light source 110, the interference optical system 120, and the calibrating optical system 180 will be described later.

The photodetector 130 receives the interfering light and generates an electric signal corresponding to the intensity of the interfering light. This electric signal is referred to as "detection signal". A detection signal based on the first interfering light is referred to as "first detection signal", and a detection signal based on the second interfering light is referred to as "second detection signal". The photodetector 130 includes one or more photosensitive elements. The photosensitive elements each include a photoelectric conversion element such as a photodiode. The photodetector 130 may be a sensor, such an image sensor, including a plurality of photosensitive elements. In the present embodiment, one photodetector 130 detects both the first interfering light and the second interfering light. As will be described later in another embodiment, a photodetector that detects the first interfering light and a photodetector that detects the second interfering light may be separately provided. In that case, an interference optical system that generates the first interfering light and an interference optical system that generates the second interfering light may be separately provided. A device including at least one photodetector is herein called "photosensitive device". The photosensitive device generates and outputs a first detection signal corresponding to the intensity of the first interfering light and a second detection signal corresponding to the intensity of the second interfering light.

The processing circuit 140 is an electronic circuit that controls the light source 110 and executes processing based on a detection signal outputted from the photodetector 130. The processing circuit 140 may include a control circuit that controls the light source 110 and a signal processing circuit that executes signal processing based on the detection signal. The processing circuit 140 may be constituted as one circuit or may be an aggregate of a plurality of separate circuits. The processing circuit 140 sends out a control signal to the light source 110. The control signal causes the light source 110 to periodically change the frequency of the emitted light within a predetermined range. In other words, the control signal is a signal that sweeps the frequency of light that is emitted from the light source 110. The control signal is a signal that inputs, to the light source 110, a voltage or a current that periodically fluctuates with certain amplitude.

In the present embodiment, the processing circuit 140 switches between operating in a measurement mode of measuring the distance to and/or the velocity of the physical object 300 and operating in a calibration mode of updating the correcting data. In the measurement mode, the processing circuit 140 acquires a first detection signal outputted from the photodetector 130 with the light source 110 emitting frequency-modulated light and corrects the first detection signal on the basis of the correcting data stored in the storage device 150. The correcting data may for example be data that defines a correspondence relationship between the voltage of a control signal and a correction value for correcting the period or frequency of a detection signal. Details of the correcting data will be described later. The processing circuit 140 determines the distance to the physical object 300 and/or the velocity of the physical object 300 on the basis of the first detection signal corrected using the correcting data. The processing circuit 140 generates and outputs data representing the distance and/or the velocity. This data is hereinafter referred to as "measurement data". Meanwhile, in the calibration mode, the processing circuit 140 acquires a second detection signal outputted from the photodetector 130 with the light source 110 emitting frequency-modulated light and modifies the correcting data on the basis of the second detection signal and a reference distance set according to the optical path length of the calibrating optical system 180. The processing circuit 140 updates existing correcting data to the correcting data thus modified. In a subsequent measurement, the processing circuit 140 corrects a first detection signal using the correcting data thus updated and generates measurement data.

The storage device 150 includes any storage medium such as a semiconductor memory, a magnetic disk, or an optical disk. The storage device 150 stores correcting data that is used in a correction process that is executed by the processing circuit 140 and data representing the reference distance corresponding to the optical path length of the calibrating optical system 180. The correcting data may include, for example, one or more correction tables. The correcting data may include a plurality of correction tables. The plurality of correction tables may each be stored in association with a corresponding one of a plurality of different operating states of the light source 110. An operating state of the light source 110 here may be a state that is characterized, for example, by the modulation voltage amplitude, the bias voltage, or the temperature of the light source 110. The correcting data is not limited to a correction table but may be data of any form such as a function. The storage device 150 also stores a computer program that is executed by the processing circuit 140.

The processing circuit 140 and the storage device 150 may be integrated on one circuit board, or may be provided on separate circuit boards. Functions of the processing circuit 140 may be dispersed across a plurality of circuits. At least some of the functions of the processing circuit 140 may be implemented by an external computer installed in a place away from other constituent elements. Such an external computer may execute, vis a cable or wireless communication network, operating control of the light source 110 and the photodetector 130 and/or signal processing based on a detection signal outputted from the photodetector 130.

Next, configuration examples of the light source 110, the interference optical system 120, and the calibrating optical system 180 are described.

Fig. 3 is a block diagram showing configuration examples of the light source 110 and the interference optical system 120. In this example, the light source 110 includes a driving circuit 111 and a light-emitting element 112. The driving circuit 111 receives a control signal that is outputted from the processing circuit 140, generates a driving current signal corresponding to the control signal, and inputs the driving current signal to the light-emitting element 112. The light-emitting element 112 may be an element, such as s semiconductor laser element, that emits laser light having high coherence. The light-emitting element 112 emits frequency-modulated laser light in response to the driving current signal.

The frequency of laser light that is emitted from the light-emitting element 112 is modulated with constant periodicity. The modulation period of the frequency may for example be longer than or equal to 1 microsecond (µs) and shorter than or equal to 10 milliseconds (ms). The modulation amplitude of the frequency may for example be higher than or equal to 100 MHz and lower than or equal to 1 THz. The wavelength of the laser light may be included in a near-infrared wavelength region for example longer than or equal to 700 nm and shorter than or equal to 2000 nm. In sunlight, the amount of near-infrared light is smaller than the amount of visible light. For this reason, the effect of sunlight can be reduced by using near-infrared as the laser light. Depending on the purposes, the wavelength of the laser light may be included in a wavelength region of visible light longer than or equal to 400 nm and shorter than or equal to 700 nm or a wavelength region of ultraviolet light.

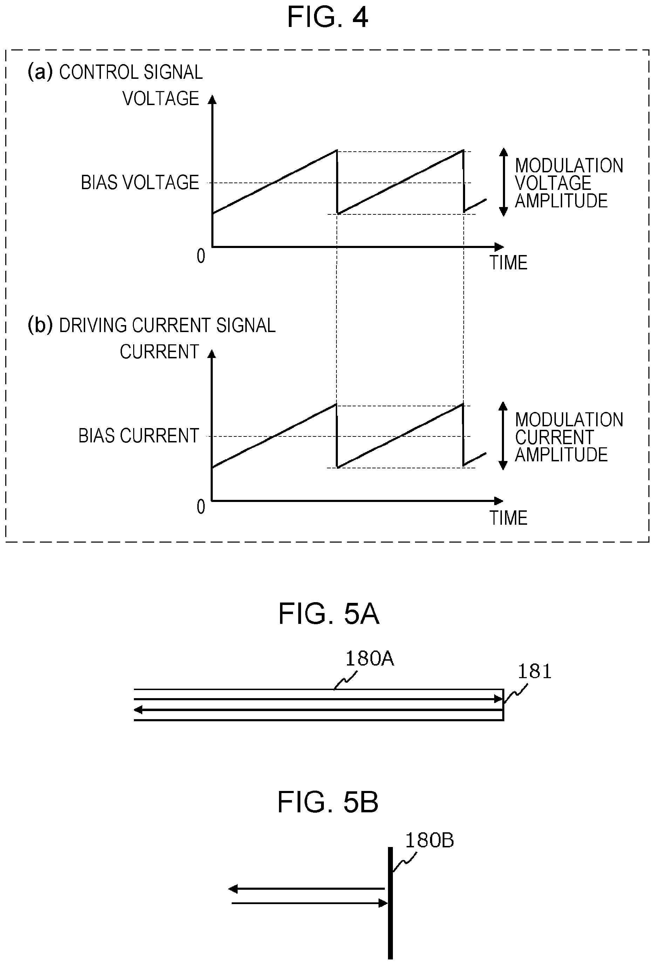

Fig. 4 is a diagram showing examples of a control signal that is outputted from the processing circuit 140 and a driving current signal that is outputted from the driving circuit 111. Portions (a) and (b) of Fig. 4 show examples of the waveforms of the control signal and the driving current signal, respectively. The control signal applies, to the driving circuit 111 of the light source 110, a voltage that fluctuates with predetermined periodicity and predetermined amplitude. For example, as shown in portion (a) of Fig. 4, the voltage of the control signal may be modulated into a sawtooth waveform. The voltage of the control signal is not limited to a sawtooth waveform but may be modulated into a triangular waveform. Since the voltage of the control signal repeats a linear change as in the case of a sawtooth waveform or a triangular waveform, the frequency of light that is emitted from the light-emitting element 112 can be swept in an almost linear form. Note, however, that as mentioned earlier, the frequency is not completely linearly swept. The amplitude of a modulated waveform of such a control signal is called "modulation voltage amplitude", and a voltage lying at the midpoint of a modulation range is called "bias voltage". The control signal applies, to the driving circuit 111 of the light source 110, a voltage that fluctuates around the bias voltage.

The driving circuit 111 converts the control signal into the driving current signal and drives the light-emitting element 112 in accordance with the driving current signal. As shown in portion (b) of Fig. 4, the driving current signal changes in a waveform corresponding to the waveform of the control signal. The modulation range, i.e., amplitude, of the driving current signal is called "modulation current amplitude", and a voltage lying at the midpoint of the modulation range is called "bias current". As the voltage of the control signal increases, the driving current signal increases, so that the frequency of laser light that is emitted from the light-emitting element 112 becomes higher (that is, the wavelength becomes shorter). On the other hand, as the voltage of the control signal decreases, the driving current signal decreases, so that the frequency of laser light that is emitted from the light-emitting element 112 becomes lower (that is, the wavelength becomes longer).

In the example shown in Fig. 3, the interference optical system 120 includes a divider 121, a mirror 122, an optical switch 128, and a collimator 123. The divider 121 divides laser light emitted from the light-emitting element 112 of the light source 110 into reference light and output light and generates interfering light by coupling the reference light with reflected light from the physical object 300 or the calibrating optical system 180. The mirror 122 reflects the reference light back to the divider 121. The optical switch 128 switches the destination of the output light between the collimator 123 and the calibrating optical system 180. That is, the optical switch 128 can switch between a first state in which to emit the output light to the physical object 300 and a second state in which to emit the output light to the calibrating optical system 180. The operation of the optical switch 128 is controlled by the processing circuit 140. In the measurement mode, the processing circuit 140 puts the optical switch 128 into the first state to cause output light 22 to fall on the collimator 123. In the calibration mode, the processing circuit 140 puts the optical switch 128 into the second state to cause the output light 22 to fall on the calibrating optical system 180. The collimator 123 includes a collimating lens, converts the output light outputted from the optical switch 128 into light having an almost parallel spread angle, and irradiates the physical object 300 with the light. The calibrating optical system 180 has at least one reflecting surface. The calibrating optical system 180 reflects, with the reflecting surface, the output light outputted from the optical switch 128 and returns the resulting reflected light to the optical switch 128.

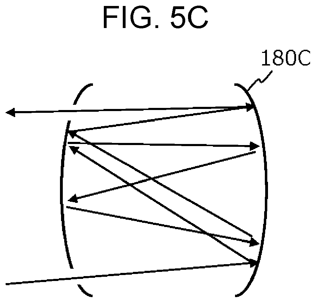

Figs. 5A to 5C are diagrams schematically showing examples of the calibrating optical system 180. Fig. 5A shows an example of the calibrating optical system 180 including an optical fiber 180A. In this example, output light from the optical switch 128 is reflected off a reflecting surface 181 situated at an end of the optical fiber 180A and returns to the optical switch 128. Fig. 5B shows an example of the calibrating optical system 180 including a mirror 180B. In this example, output light from the optical switch 128 is reflected off a reflecting surface of the mirror 180B and returns to the optical switch 128. Fig. 5C shows an example of the calibrating optical system 180 including a multipath cell 180C. In this example, output light from the optical switch 128 is multiply reflected off reflecting surfaces of a plurality of mirrors included in the multipath cell and returns to the optical switch 128.

The measurement apparatus 100 has a measurable distance range (e.g., from 0 m to 50 m) set therefor. Further, the calibrating optical system 180 has set therefor a reference distance that is determined according to the optical path length thereof and stored in the storage device 150. The calibrating optical system 180 may be designed so that the reference distance falls within the measurable distance range of the measurement apparatus 100. For example, in the example shown in Fig. 5A, an optical path length from the optical switch 128 to the reflecting surface 181 situated at the end of the optical fiber 180A may be set as the reference distance. In the example shown in Fig. 5B, an optical path length from the optical switch 128 to the reflecting surface of the mirror 180B may be set as the reference distance. In the example shown in Fig. 5C, half of an optical path length from the optical switch 128 via the multipath cell 180C back to the optical switch 128 may be set as the reference distance. The calibrating optical system 180 may be designed so that these reference distances fall within the measurable distance range of the measurement apparatus 100. With such a configuration, the optical path length of light from the optical switch 128 via the calibrating optical system 180 back to the optical switch 128 becomes closer to an optical path length that is assumed at the time of measurement. This makes it possible to reduce the effect of reflection noise at a short distance inside the apparatus and avoid such a problem that too short a distance makes the beat frequency too low to measure. Suppose, as one example, a case where the measurable distance range of the measurement apparatus 100 is from 0 m to 20 m. In that case, the length of the optical fiber 180A in the example shown in Fig. 5A, the optical path length from the optical switch 128 to the mirror 180B in the example shown in Fig. 5B, and half of the optical path length from the optical switch 128 via the multipath cell 180C back to the optical switch 128 in the example shown in Fig. 5C may be designed to take on values falling, for example, within a range of several tens of centimeter to several tens of meters. In the example shown in Fig. 5A, the optical path length may be increased by bending or winding the optical fiber 180A. In the example shown in Fig. 5B, the optical path length may be increased by combining another mirror or other optical elements as well as the mirror 180B illustrated.

The interference optical system 120 is not limited to the configuration shown in Fig. 3 but may for example include a fiber optical system. In that case, a fiber coupler may be used as the divider 121. The reference light does not necessarily need to be reflected off the mirror 122, but the reference light 121 may be returned to the divider 121, for example, by the routing of an optical fiber.

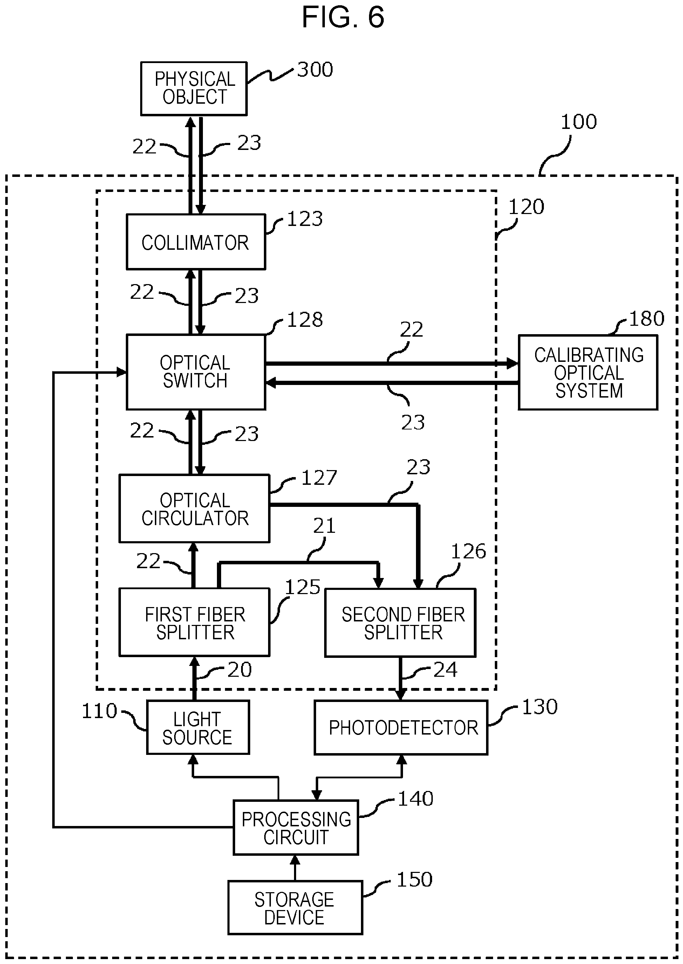

Fig. 6 is a block diagram showing a configuration example of the measurement apparatus 100 whose interference optical system 120 includes a fiber optical system. In the example shown in Fig. 6, the interference optical system 120 includes a first fiber splitter 125, a second fiber splitter 126, and an optical circulator 127 in addition to the collimator 123 and the optical switch 128. The first fiber splitter 125 splits laser light 20 emitted from the light source 110 into reference light 21 and output light 22. The first fiber splitter 125 causes the reference light 21 to fall on the second fiber splitter 126 and causes the output light 22 to fall on the optical circulator 127. The optical circulator 127 causes the output light 22 to fall on the optical switch 128 and causes reflected light 23 from the optical switch 128 to fall on the second fiber splitter 126. The second fiber splitter 126 causes interfering light 24 resulting from interference between the reference light 21 and the reflected light 23 to fall on the photodetector 130. The optical switch 128 causes, in accordance with an instruction from the processing circuit 140, the output light 22 to fall on either the collimator 123 or the calibrating optical system 180. The collimator 123 forms the output light 22 into the shape of a beam and emits the output light 22 toward the physical object 300.

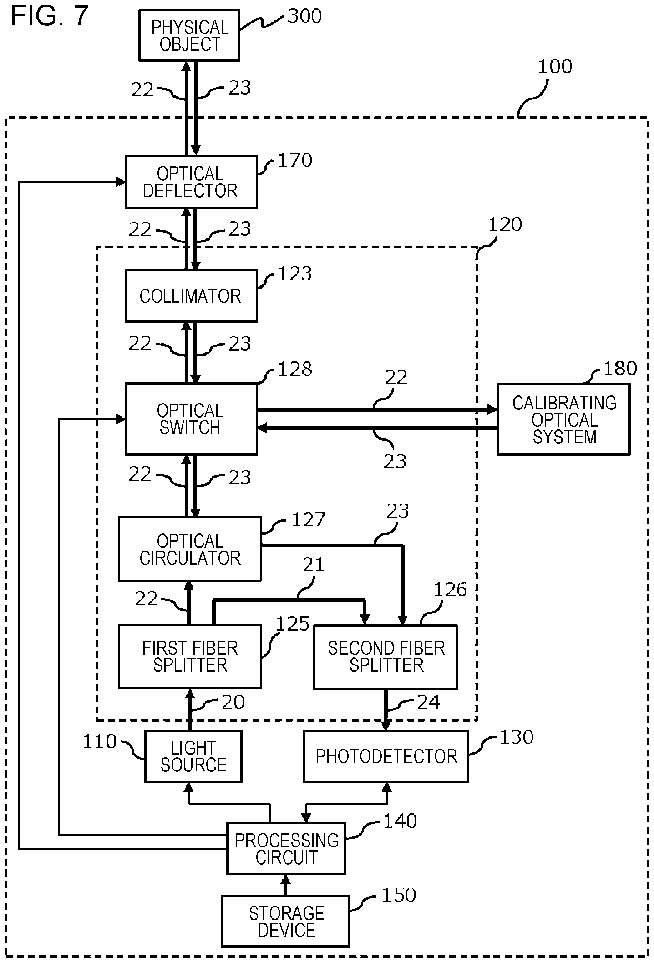

The measurement apparatus 100 may further include an optical deflector that changes the direction of emitted light. Fig. 7 is a block diagram showing an example of the measurement apparatus 100 including an optical deflector 170. The optical deflector 170 may for example include a MEMS (micormechanical electrosystem) mirror or a galvanometer mirror. The optical deflector 170 can change the direction of emission of the output light 22 by changing the angle of the mirror in accordance with an instruction from the processing circuit 140. This makes it possible to achieve a beam scan. The optical deflector 170 is not limited to the foregoing configuration. The optical deflector 170 may be a beam scan device, such as that described in Internal Publication No. 2019/130720, that includes an optical phased array and a slow-light waveguide.

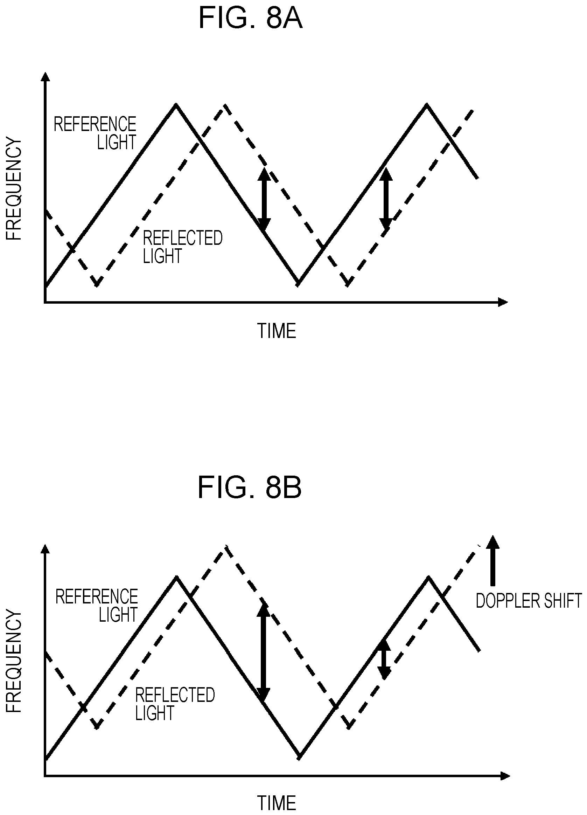

Next, the FMCW-LiDAR technique, which is used in the present embodiment, is briefly described with reference to Figs. 8A and 8B.

Fig. 8A is a diagram schematically showing examples of time changes in frequency of reference light and reflected light in a case where the physical object 300 is at rest. The example described here is a case where the changes in frequency take triangular waveforms. In Fig. 8A, the solid line represents the reference light, and the dashed line represents the reflected light. The frequency of the reference light shown in Fig. 8A linearly increases during a modulation period and then linearly decreases as much as it increased. In comparison with the frequency of the reference light, the frequency of the reflected light shifts along the time axis as much as it takes time for light emitted from the measurement apparatus 100 and reflected by the physical object 300 to return. For this reason, interfering light resulting from interference between the reference light and the reflected light has a frequency corresponding to a difference between the frequency of the reflected light and the frequency of the reference light. The double-headed arrows shown in Fig. 8A indicate the difference in frequency between the reflected light and the reference light. The photodetector 130 outputs a signal representing the intensity of the interfering light. This signal is called "beat signal". The frequency of the beat signal, i.e., the beat frequency, is equal to the difference in frequency. The processing circuit 140 can calculate the distance from the measurement apparatus 100 to the physical object 300 on the basis of the beat frequency.

Fig. 8B is a diagram schematically showing examples of time changes in frequency of reference light and reflected light in a case where the physical object 300 is approaching the measurement apparatus 100. In a case where the physical object 300 approaches, a Doppler shift causes the frequency of the reflected light to shift in a direction toward increasing along the frequency axis in comparison with a case where the physical object 300 is at rest. The amount of shift in frequency of the reflected light depends on the magnitude of a component of a velocity vector in a certain portion of the physical object 300 projected in the direction of the reflected light. Beat frequencies vary between a case where the frequencies of the reference light and the reflected light linearly increase and a case where the frequencies of the reference light and the reflected light linearly decrease. In the example shown in Fig. 8B, the beat frequency in the case where the frequencies of the reference light and the reflected light linearly decrease is higher than the beat frequency in the case where the frequencies of the reference light and the reflected light linearly increase. The processing circuit 140 can calculate the velocity of the physical object 300 on the basis of the difference between these beat frequencies. In a case where the physical object 300 recedes from the measurement apparatus 100, the frequency of the reflected light shifts in a direction toward decreasing along the frequency axis in comparison with the case where the physical object 300 is at rest. In this case too, the velocity of the physical object 300 can be calculated on the basis of the difference in beat frequency between the case where the frequencies of the reference light and the reflected light linearly increase and the case where the frequencies of the reference light and the reflected light linearly decrease.

### <Operation>

The following describes the operation of the measurement apparatus 100 of the present embodiment.

The operation of the measurement apparatus 100 of the present embodiment can be broadly divided into two steps, namely (1) calibration and (2) measurement. The calibration is an operation that a user of the measurement apparatus 100 carries out to update a correction table. It should be noted that the correction table is generated in advance by a manufacturer before shipment of the measurement apparatus 100 and stored in the storage device 150. The measurement is an operation by which the user of the measurement apparatus 100 measures the distance to and/or the velocity of the physical object 300.

### <Operation of Calibration>

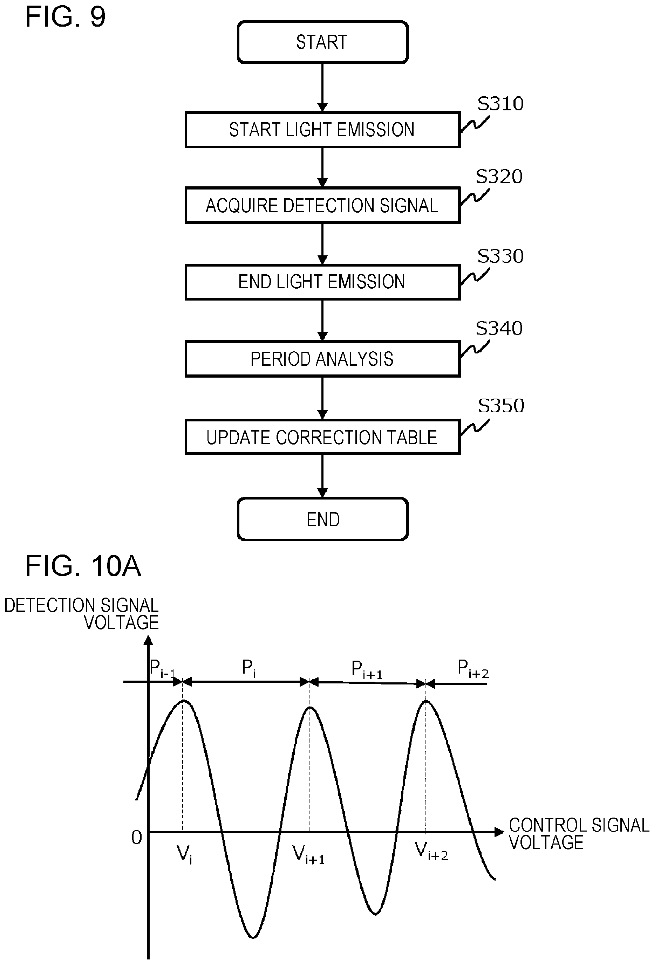

Fig. 9 is a flow chart showing an example of an operation of calibration. The operation of calibration includes the actions of steps S310 to S350 shown in Fig. 9. The following describes the action of each step. The operation of calibration may be started, for example, in accordance with an instruction from the user.

### (Step S310)

The processing circuit 140 sends out a control signal to the light source 110 after having switched the destination of output from the optical switch 128 so that output light falls on the calibrating optical system 180. The modulation voltage amplitude, bias voltage, and modulation period of the control signal may be set to predetermined values or values designated by the user. In response to the control signal, the light source 110 starts to emit frequency-modulated light.

### (Step S320)

The processing circuit 140 acquires a detection signal from the photodetector 130. While the light is being emitted from the light source 110, the photodetector 130 outputs a detection signal corresponding to the intensity of interfering light. The time length of a detection signal that the processing circuit 140 acquires may for example be 1 to 50 times longer than the modulation period. The processing circuit 140 may average detection signals for improvement in S/N ratio of a detection signal. In that case, the processing circuit 140 repeats a process of acquiring detection signals for a relatively long period of time and averaging the detection signals for a predetermined period of time that is sufficiently shorter than the modulation period. The processing circuit 140 includes, for example, an analog/digital (A/D) converter and a memory. The processing circuit 140 digitalizes a detection signal waveform, for example, with the A/D converter and stores it in the memory.

### (Step S330)

The processing circuit 140 stops the emission of the light from the light source 110 by stopping sending out the control signal. This step may be executed in accordance with an instruction from an operator. Alternatively, the processing circuit 140 may automatically stop the emission in accordance with a predetermined program. In a case where the operation of calibration is repeated for plurality of different operating conditions or in a case where ranging is performed in succession to the updating of the correction table, the light may be kept emitted.

### (Step S340)

The processing circuit 140 analyzes the period of the detection signal. An example of a method for analyzing the period is a method in which a point taking on the maximum value of an upward projecting portion of the waveform of a detection signal or a point taking on the minimum value of a downward projecting portion of the waveform of the detection signal is identified and the length of time from the point taking on the maximum value to the next point taking on the maximum value or the length of time from the point taking on the minimum value to the next point taking on the minimum value is regarded as one period. Alternatively, in a case where there is a uniform distribution of positive and negative values of a detection signal, the period may be determined on the basis of zero-crossing points. A zero-crossing point is a point at which the value of a signal changes from positive to negative or from negative to positive. The processing circuit 140 may extract zero-crossing points from a detection signal, and the length of time from a positive to negative zero-crossing point to the next positive to negative zero-crossing point or the length of time from a negative to positive zero-crossing point to the next negative to positive zero-crossing point may be regarded as one period.

Fig. 10A is a graph showing an example of a result of analysis of the period of a detection signal. In this graph, a waveform indicating a relationship between the voltage of a control signal and the voltage of the detection signal is plotted. Periods in which the control signal voltage takes on Vi, Vᵢ₊₁, Vᵢ₊₂, ... at which the voltage of the detection signal reaches the peaks (maximum values) of upward projecting portions are defined as Pi, Pᵢ₊₁, Pᵢ₊₂, .... In this example, the length of time from the point of time at which the control signal voltage takes on Vᵢ to the point of time at which the control signal voltage takes on Vᵢ₊₁ is defined as the period Pᵢ.

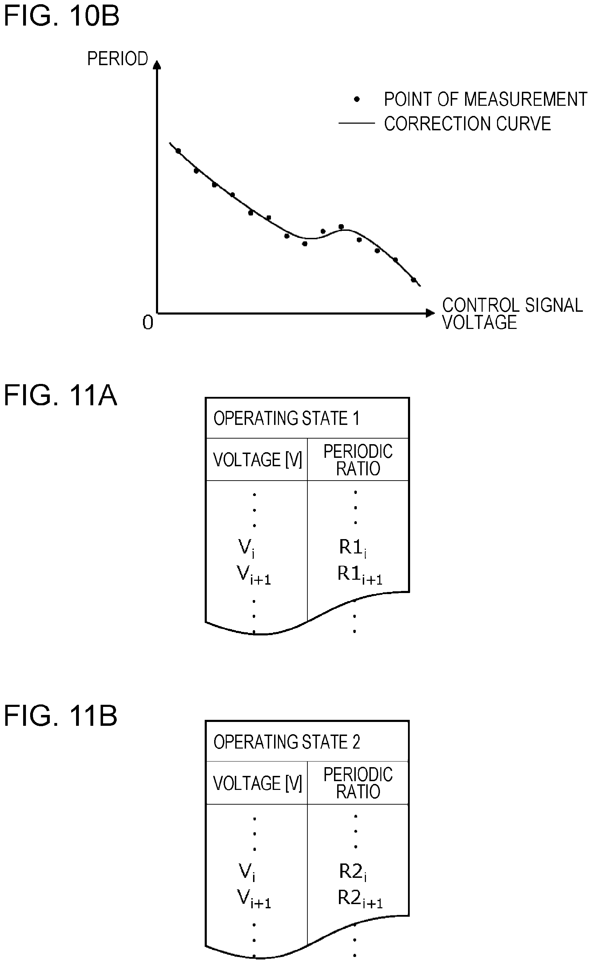

Next, as shown in Fig. 10B, the processing circuit 140 plots a relationship between the voltages Vi, Vᵢ₊₁, Vᵢ₊₂, ... of the control signal and the periods Pi, Pᵢ₊₁, Pᵢ₊₂, ... at those voltages and obtains an approximate expression for the plotted points. The approximate expression is for example an expression composed of two or more terms and may for example be obtained using the method of least squares.

### (Step S350)

The processing circuit 140 creates, on the basis of the approximate expression thus generated, a correction table indicating a relationship between the voltages of the control signal and periodic ratios and overwrite updates, with the contents of the correction table, an existing correction table stored in the storage device 150. A new correction table may be stored with the existing correction table left instead of being overwritten. At this point in time, the correction table may be stored in association with information indicating a time stamp or an operating state at that time.

Figs. 11A and 11B are diagrams showing examples of correction tables. Correction tables may be stored separately for each of different operating states (in this example, modulation voltage amplitudes) of the light source in such a format as to indicate a relationship between control signal and periodic ratio. Figs 11A and 11B show examples of correction tables associated with different first and second operating states of the light source, respectively. Although, in these examples, two correction tables are stored, one correction table or three or more correction tables may be stored. Further, without being bound by correction table formats, correcting data indicating a relationship between control signal and correction value such as periodic ratio in another format such as a function may be stored.

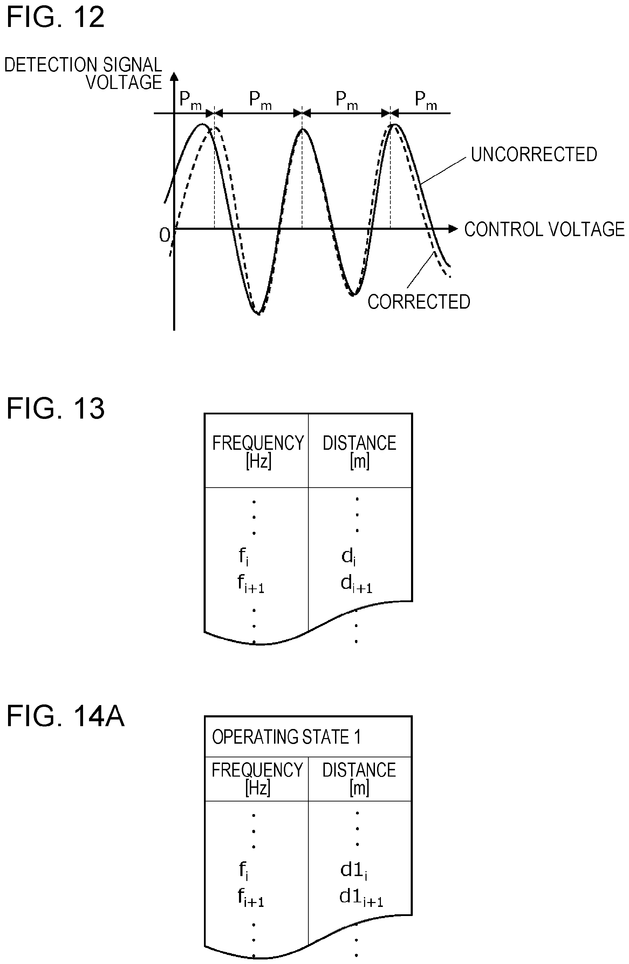

A periodic ratio may be a value obtained by normalizing the period by a predetermined constant so that a beat frequency that is calculated from the waveform of a corrected detection signal takes on a value that is theoretically derived from the optical path length of the calibrating optical system 180, the modulation period, the modulation frequency range, and the speed of light. Fig. 12 is a diagram showing examples of the waveforms of uncorrected and corrected detection signals. The constant may be set to such a value that the beat frequency of the waveform of the corrected detection signal takes on a constant value 1/Pm.

A relationship between beat frequency and distance may be stored either in the memory in the processing circuit 140 or in the storage device 150 in the form of a conversion table such as that shown in Fig. 13. Such a conversion table is used when the processing circuit 140 calculates a distance value in the step of ranging operation.

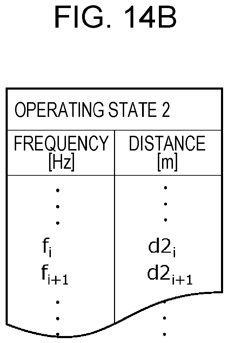

It should be noted that a periodic ratio may be determined by normalization by an appropriate constant for each operating state. In that case, for example, as shown in Figs. 14A and 14B, a relationship between beat frequency and distance in each operating state may be stored as correcting data such as a conversion table or a function.

By carrying out such a calibration operation, the processing circuit 140 can appropriately update a correction table according to the state at the time. Also, when a correction table is created first before shipment of the product, the correction table can be created by a method that is similar to the method shown in Fig. 9.

### <Ranging Operation>

Next, an example of a measuring operation by the measurement apparatus 100 is described.

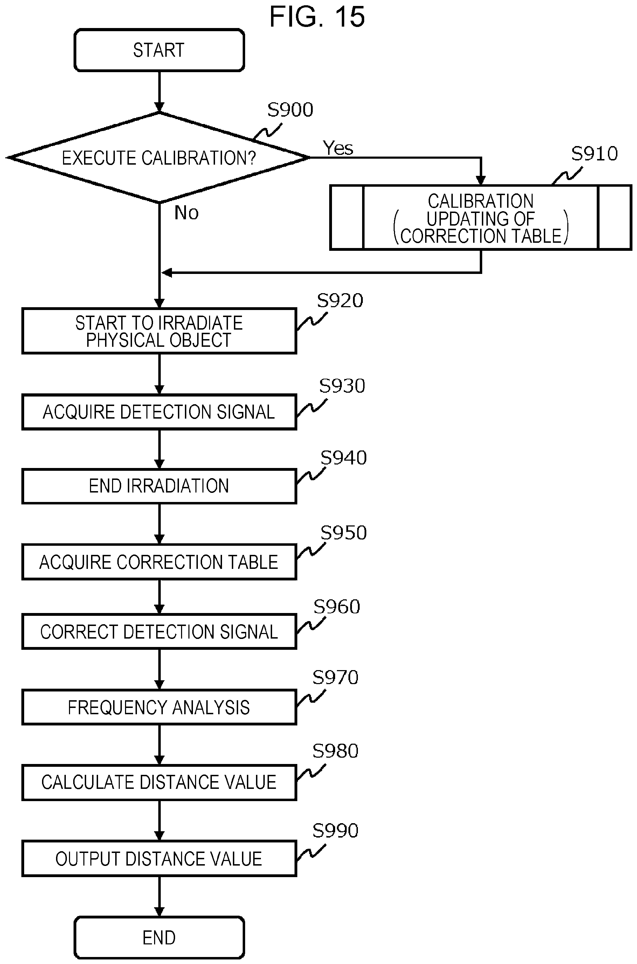

Fig. 15 is a flow chart showing an example of a measuring operation. In this example, in carrying out the measuring operation, the processing circuit 140 executes the actions of steps S900 to S990 shown in Fig. 15. The following describes the action of each step. The measuring operation is started in accordance with an instruction from the user.

### (Step S900)

First, the processing circuit 140 determines whether to execute a calibration operation for updating a correction table. In a case where the processing circuit 140 executes the calibration operation, the processing circuit 140 proceeds to step S910. In a case where the processing circuit 140 does not execute the calibration operation, the processing circuit 140 proceeds to step S920.

The calibration operation may be executed, for example, in a case where there is a high possibility that the characteristics of the light source 110 might have changed. The characteristics of the light source 110 may change depending, for example, on passage of time or temperature. For this reason, the processing circuit 140 may determine, on the basis of the duration of use of the light source 110 or the temperature of the light source 110, whether to execute the calibration operation. Alternatively, the processing circuit 140 may determine, in accordance with an instruction from the user, whether to execute the calibration operation.

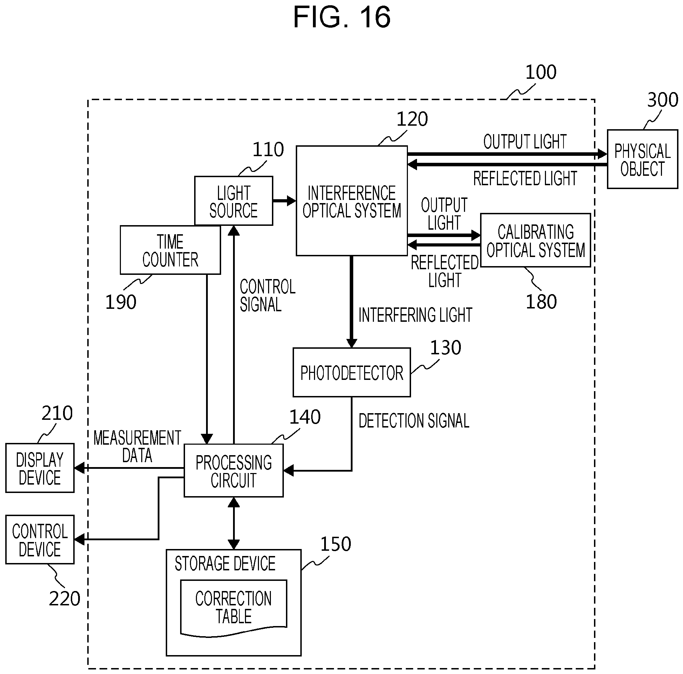

Fig. 16 is a diagram schematically showing a configuration example of a measurement apparatus 100 that executes the calibration operation on the basis of the duration of use of the light source 110. In this example, the measurement apparatus 100 includes a time counter 190 that measures the duration of use of the light source 110. The duration of use may be the length of time from the start of use of the light source 110 to the present or the length of time from the previous resetting of the time measurement to the present. The time counter 190 outputs a measured time to the processing circuit 140. In a case where the measured time exceeds a certain threshold (e.g., ten days, three months, or one year), the processing circuit 140 may determine to execute the calibration operation. In this way, the processing circuit 140 can switch between the measurement mode and the calibration mode on the basis of the duration of use of the light source 110.

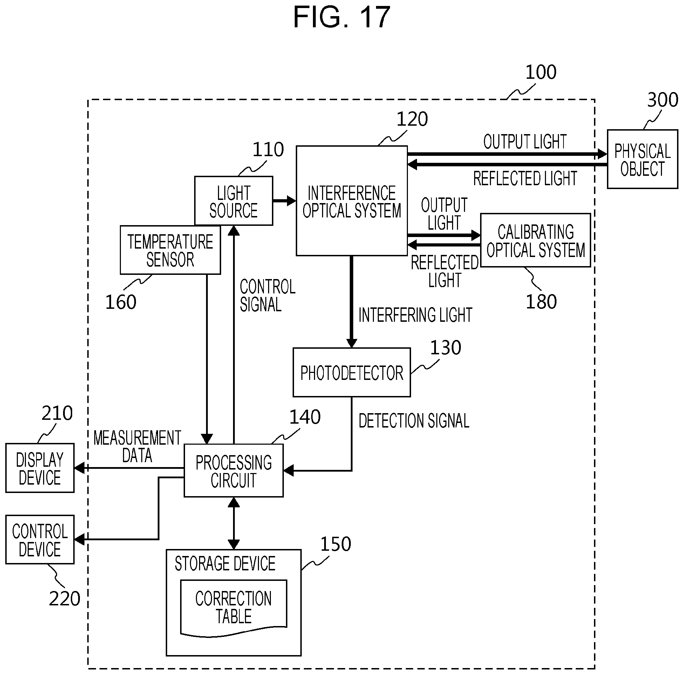

Fig. 17 is a diagram schematically showing a configuration example of a measurement apparatus 100 that executes the calibration operation on the basis of the temperature of the light source 110. In this example, the measurement apparatus 100 includes a temperature sensor 160 that measures the temperature of the light source 110. The temperature sensor 160 may be disposed to be able to measure the temperature of the light-emitting element 112 as directly as possible. For example, the temperature sensor 160 may be disposed to be firmly fixed to the light-emitting element 112 per se or a heat sink to which the light-emitting element 112 is fixed. The temperature sensor 160 outputs a measured temperature to the processing circuit 140. In a case where the measured temperature exceeds a certain temperature or in a case where the measured temperature falls below a certain temperature, the processing circuit 140 may determine to execute the calibration operation. In this way, the processing circuit 140 can switch between the measurement mode and the calibration mode on the basis of the temperature of the light source 110.

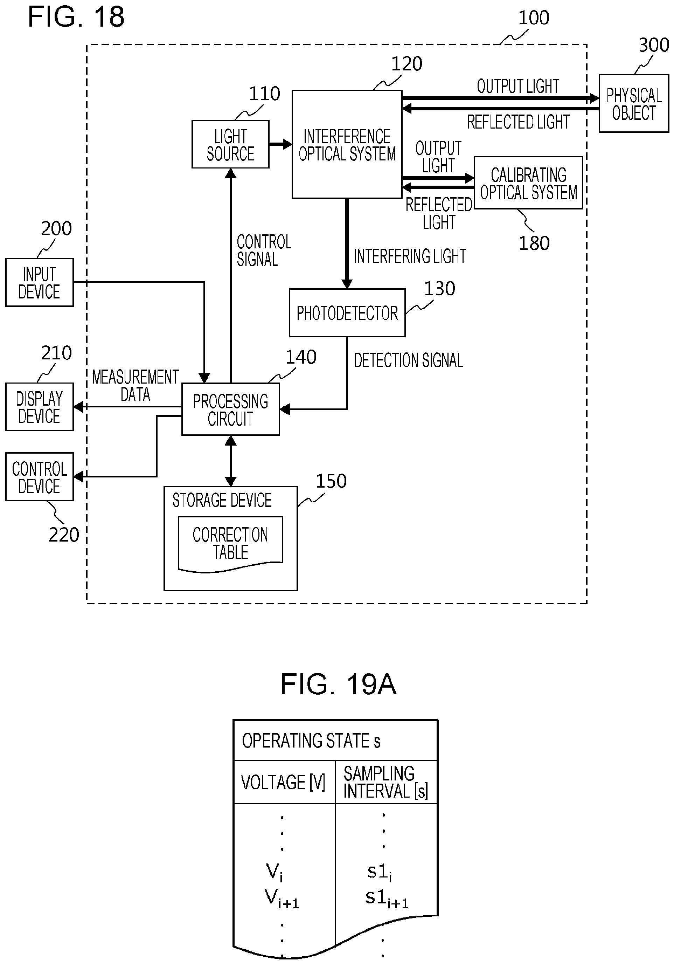

Fig. 18 is a diagram schematically showing a configuration example of a measurement apparatus 100 that executes the calibration operation in accordance with an instruction from the user. In this example, the measurement apparatus 100 is connected to an input device 200 that receives input from the user. The input device 200 may be any input unit such as a button, a keyboard, or a touchscreen. The input device 200 and the display device 210 may be configured as one device. In this example, the processing circuit 140 executes the calibration operation upon input from the user using the input device 200. In this way, the processing circuit 140 can switch between the measurement mode and the calibration mode in response to input from the user.

The characteristics of the light source 110 change due to various factors in addition to those noted above. For example, the characteristics of the light source 110 may change under impact. For this reason, the measurement apparatus 100 may include a sensor, such as a gyroscope, that measures the magnitude of impact. In a case where the measured magnitude of impact or an accumulated value thereof exceeds a threshold, the processing circuit 140 may determine to execute the calibration operation.

In addition, the characteristics of the light source 110 also depends on the modulation voltage amplitude of the control signal, the modulation current amplitude, the bias voltage, the bias current, or input power. For this reason, in a case where the modulation voltage amplitude, the modulation current amplitude, the bias voltage, the bias current, or the input power has changed by not less than a threshold, the processing circuit 140 may determine to execute the calibration operation. It should be noted that the modulation voltage amplitude, the modulation current amplitude, the bias voltage, the bias current, or the input power may be changed by a user operation. In this way, the processing circuit 140 may switch to the calibration mode when the operating state of the light source 110 has been changed by changing the control signal in the measurement mode.

### (Step S910)

The processing circuit 140 executes the calibration operation and corrects the correction table. This calibration operation is identical to the operation shown in Fig. 9. By executing the operation from step S310 to step S350 shown in Fig. 9, the processing circuit 140 updates the correction table according to the state at the time. After step S910, the processing circuit 140 proceeds to step S920.

### (Step S920)

The processing circuit 140 sends out a control signal to the light source 110 with the destination of output of light from the optical switch 128 switched to the collimator 123 and causes frequency-modulated light to be emitted from the light source 110. This causes the physical object 300 to be irradiated with laser light.

### (Step S930)

The processing circuit 140 acquires a detection signal outputted from the photodetector 130. While the light is being emitted from the light source 110, the photodetector 130 outputs a detection signal corresponding to the intensity of interfering light. The time length of a detection signal that the processing circuit 140 acquires may for example be 1 to 50 times longer than the modulation period. The processing circuit 140 may average detection signals for improvement in S/N ratio of a detection signal. In that case, the processing circuit 140 repeats a process of acquiring detection signals for a relatively long period of time and averaging the detection signals for a predetermined period of time that is sufficiently shorter than the modulation period.

### (Step S940)

The processing circuit 140 stops the emission of the light from the light source 110 by stopping sending out the control signal. This step may be executed in accordance with an instruction from the user. Alternatively, the processing circuit 140 may automatically stop the emission in accordance with a predetermined program. In a case where ranging is continuously repeated, the light may be kept emitted.

### (Step S950)

The processing circuit 140 acquires the correction table from the storage device 150. In a case where the correction table was corrected in step S910, the processing circuit 140 acquires the correction table thus updated. The correction table may be data, such as that shown in Fig. 11A, that defines a relationship between control signal voltage and periodic ratio (i.e., correction value).

### (Step S960)

The processing circuit 140 corrects the period of the detection signal on the basis of the correction table. This correction reduces fluctuations in period of the beat signal for example as shown in Fig. 12.

### (Step S970)

The processing circuit 140 conducts a frequency analysis of the waveform of the detection signal thus corrected. In this step, for example, the processing circuit 140 performs Fourier transformation on the waveform of the detection signal to generate a frequency spectrum. After that, the processing circuit 140 obtains a frequency at which the maximum peak of the frequency spectrum is obtained and uses the frequency as the beat frequency.

### (Step S980)

The processing circuit 140 calculates the beat frequency by converting it into a distance value. In this conversion process, the processing circuit 140 reads out for use, from the memory in the processing circuit 140, a conversion table illustrated in Fig. 13, Fig. 14A, or Fig. 14B.

### (Step S990)

The processing circuit 140 outputs measurement data including information on the distance value thus calculated to an external device such as the display device 210.

Through the foregoing operation, the processing circuit 140 can generate distance data on the physical object 300. In a case where ranging is continuously performed, the operation shown in Fig. 15 may be continuously repeated. Further, in a case where the velocity of the physical object 300 is measured in addition to the distance, a control signal in a triangular waveform may be used instead of a control signal in a sawtooth waveform such as that shown in Fig. 4. The processing circuit 140 can calculate the velocity by the method described with reference to Figs. 8A and 8B.

As noted above, the present embodiment can appropriately update a correction table even in a case where the characteristics of the light source 110 have changed due to aged deterioration, a change in operating environment, or other factors. The processing circuit 140 corrects a detection signal on the basis of the correction table thus updated and conducts a frequency analysis on the basis of the detection signal thus corrected. This makes it possible to obtain the distance with a reduced error in frequency of a beat signal contained in the detection signal, making it possible to more precisely measure the distance to the physical object.

In a case where the storage device 150 has a plurality of correction tables stored therein according to operating states or usage environments, the aforementioned calibration operation may be carried out on each of the correction tables.

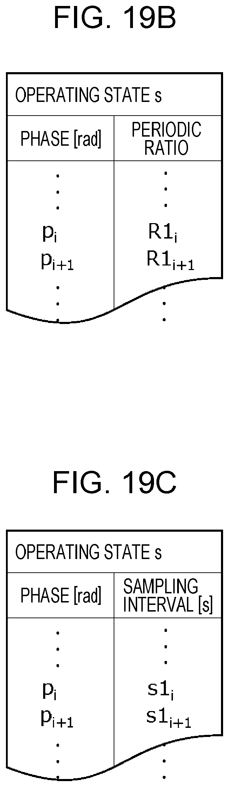

A correction table is not limited to a format that defines a relationship between control voltage and periodic ratio. For example, as shown in Fig. 19A, a correction table that designates time interval of sampling with respect to control voltage may be used. In this case, the timing of sampling of A/D conversion, which is supposed to come at regular time intervals, is changed. The processing circuit 140 may use, as a corrected detection signal, a detection signal reconfigured by thus changing the timing of sampling. Further, as shown in Fig. 19B, a correction table that designates periodic ratio with respect to phase of frequency modulation may be used. Alternatively, as shown in Fig. 19C, a correction table that designates time interval of sampling with respect to phase of frequency modulation may be used. In each of the examples shown in Figs. 19B and 19C, a correction table that defines a relationship between the timing (i.e., time) of frequency modulation instead of phase and correction value such as sampling interval or periodic ratio may be used. Further, in each of the aforementioned examples, a correction table that defines a relationship between driving current instead of control voltage and periodic ratio or sampling interval may be used. The correction table may be replaced by an approximate expression per se being stored in a storage device such as a memory as a correction function, and the processing circuit 140 may be configured to correct a detection signal on the basis of a correction function corresponding to the operating state at that time.

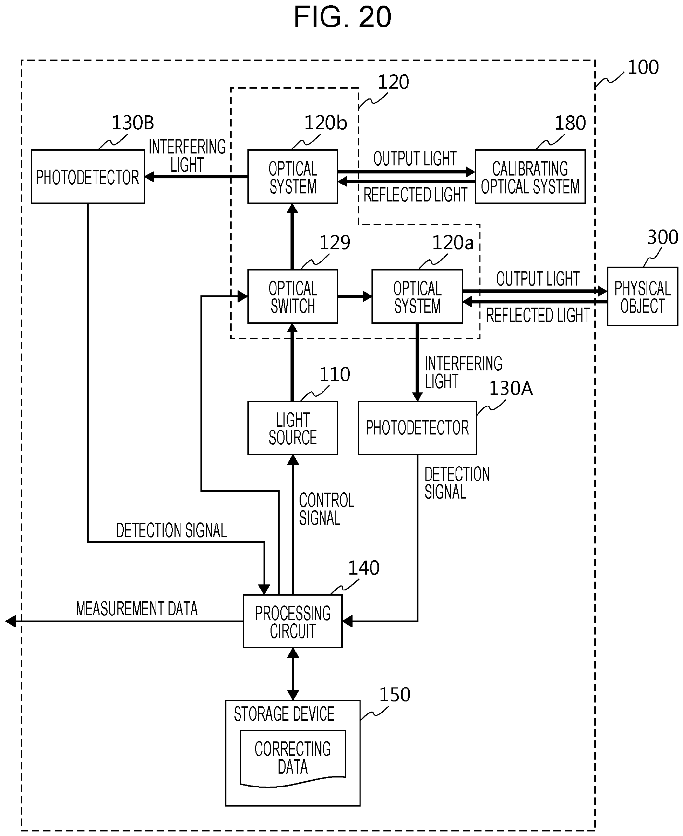

Although, in the foregoing embodiment, a common optical system and a common photodetector are used for the measurement mode and the calibration mode, optical systems and photodetectors may be provided separately for each of the modes. Fig. 20 is a diagram showing an example of such a configuration. The measurement apparatus 100 shown in Fig. 20 includes a first photodetector 130A for use in measurement and a second photodetector 130B for use in calibration. The photosensitive device is constituted by the first photodetector 130A and the second photodetector 130B. The interference optical system 120 includes an optical switch 129, a first optical system 120a for use in measurement, and a second optical system 120b for use in calibration. The optical switch 129 switches the destination of light outputted from the light source 110 between the first optical system 120a and the second optical system 120b in accordance with an instruction from the processing circuit 140. The first optical system 120a separates light inputted from the light source 110 into output light and reference light, causes the output light to fall on the physical object 300, and causes interfering light resulting from interference between reflected light from the physical object 300 and the reference light to fall on the first photodetector 130A as the first interfering light. The second optical system 120b separates light inputted from the optical switch 129 into output light and reference light, causes the output light to fall on the calibrating optical system 180, and causes interfering light resulting from interference between reflected light from the calibrating optical system 180 and the reference light to fall on the second photodetector 130B as the second interfering light.

In the embodiment shown in Fig. 20, in the measurement mode, the processing circuit 140 switches the destination of light from the optical switch 129 to the first optical system 120a, corrects, on the basis of the correcting data, a first detection signal outputted from the first photodetector 130A, and generates measurement data on the basis of the first detection signal thus corrected. On the other hand, in the calibration mode, the processing circuit 140 switches the destination of light from the optical switch 129 to the second optical system 120b and updates the correcting data on the basis of a second detection signal outputted from the second photodetector 130B. Such a configuration and operation make it possible to bring about effects that are similar to those of the aforementioned embodiment.

In the embodiment shown in Fig. 20, the optical switch 129 may be replaced by an optical divider such as a semitransparent mirror or a beam splitter, as different photodetectors are used for the measurement mode and the calibration mode. In that case, the processing circuit 140 may carry out an operation based on the measurement mode and, at the same time, update the correcting data on the basis of a detection signal that is outputted from the second photodetector 130B. Such an operation makes it possible to update the correcting data while continuously measuring the distance or the velocity, thus making it possible to further improve the precision of measurement.

### (First Modification)

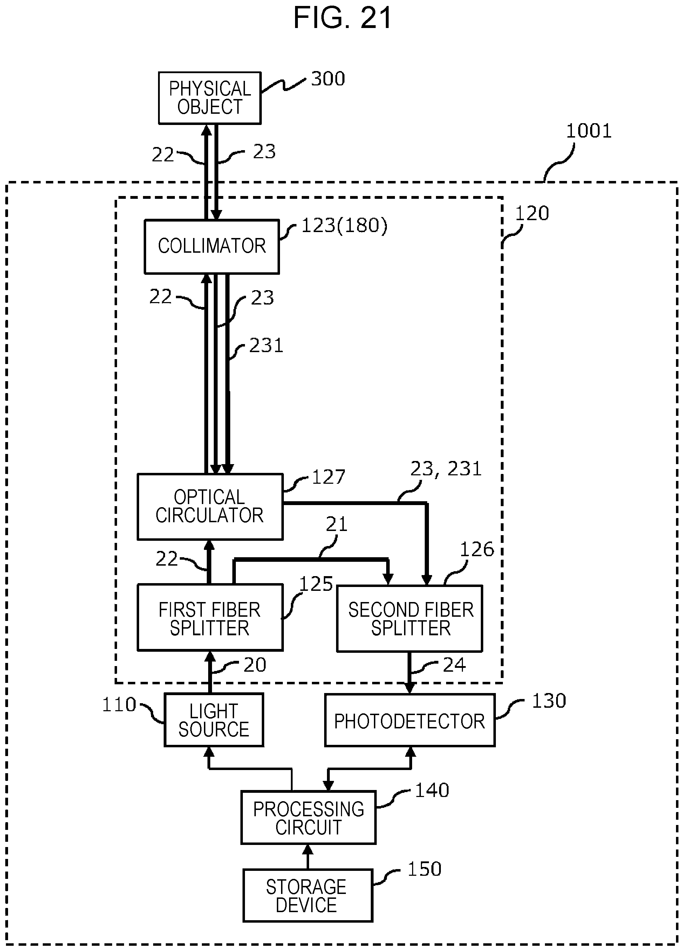

A measurement apparatus according to a first modification of the embodiment of the present disclosure is described. Fig. 21 is a block diagram schematically showing a configuration of a measurement apparatus 1001 according to the present modification. The following describes points in which the measurement apparatus 1001 of the present modification differs from the measurement apparatus 100 shown in Fig. 7.

In the measurement apparatus 100 shown in Fig. 7, the generating or updating of detection signal correcting data is performed through the utilization of reflected light 23 that is reflected off the calibrating optical system 180. On the other hand, in the measurement apparatus 1001 of the present modification, the generating or updating of correcting data is executed through the utilization of internally reflected light 231 that is produced in part of the interference optical system 120, with no calibrating optical system 180 provided separately from the interference optical system 120.

Internal reflection occurs on the path of the output light 22 in the interference optical system 120. Internal reflection may occur, for example, in an optical system constituting part of the interference optical system 120, a connection between an optical element and an optical fiber, and a connection between optical fibers. For example, as shown in Fig. 21, part of the output light 22 that falls on the collimator 123 may return as the internally reflected light 231 without being outputted toward the physical object 300. In the present modification, the aforementioned detection signal correction is executed through the utilization of this internally reflected light 231 produced in the collimator 123. In this case, the collimator 123 can be said to also serve as a calibrating optical system 180. Since the optical path length of a path along which the internally reflected light 231 produced by the collimator 123 passes is known, a process that is similar to that of the aforementioned embodiment can be executed using a detection signal (i.e. a second detection signal) that is obtained by detecting interfering light resulting from interference between the internally reflected light 231 and the reference light 21.

### (Second Modification)

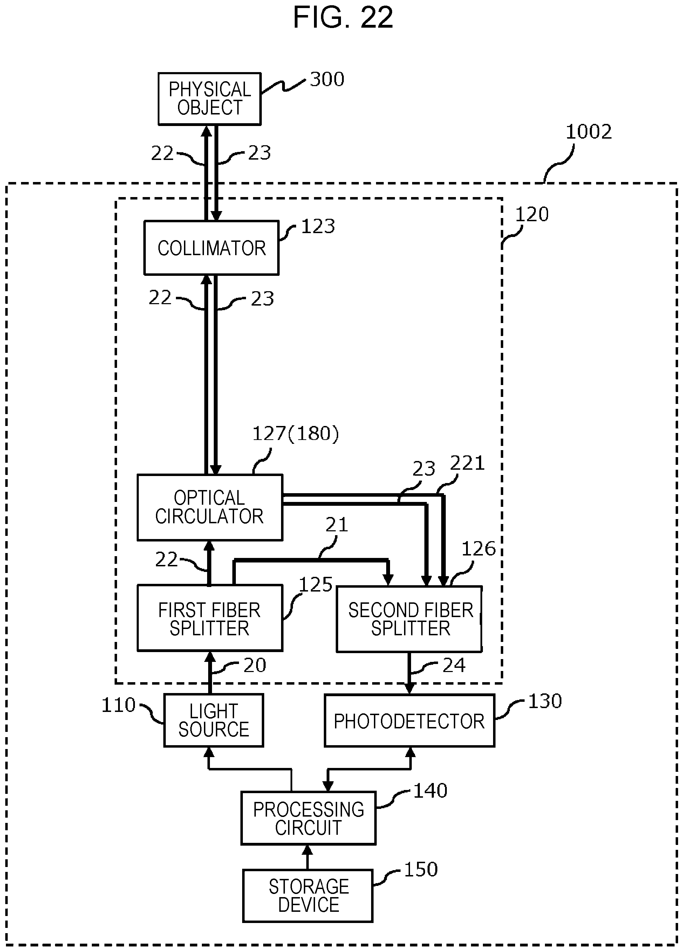

A measurement apparatus according to a second modification of the embodiment of the present disclosure is described. Fig. 22 is a block diagram schematically showing a configuration of a measurement apparatus 1002 according to the present modification.

In the measurement apparatus 1002 according to the present modification, part of the output light 22 is divided at part of the interference optical system 120 to enter the path of the reflected light 23. For example, as shown in Fig. 22, part of the output light 22 that falls on the optical circulator 127 may leak into the path of the reflected light 23 without being outputted toward the collimator 123. A process that is similar to that of the aforementioned embodiment and modification can be executed through the utilization of such leaked light 221 from the optical circulator 127. In the present embodiment, the optical circulator 127 can be said to also serve as a calibrating optical system 180.

### (Third Modification)

A measurement apparatus according to a third modification of the embodiment of the present disclosure is described. The measurement apparatus of the present modification is identical in configuration to the measurement apparatus 100 of the aforementioned embodiment. Meanwhile, the measurement apparatus of the present modification differs in calibration operation from the aforementioned embodiment.

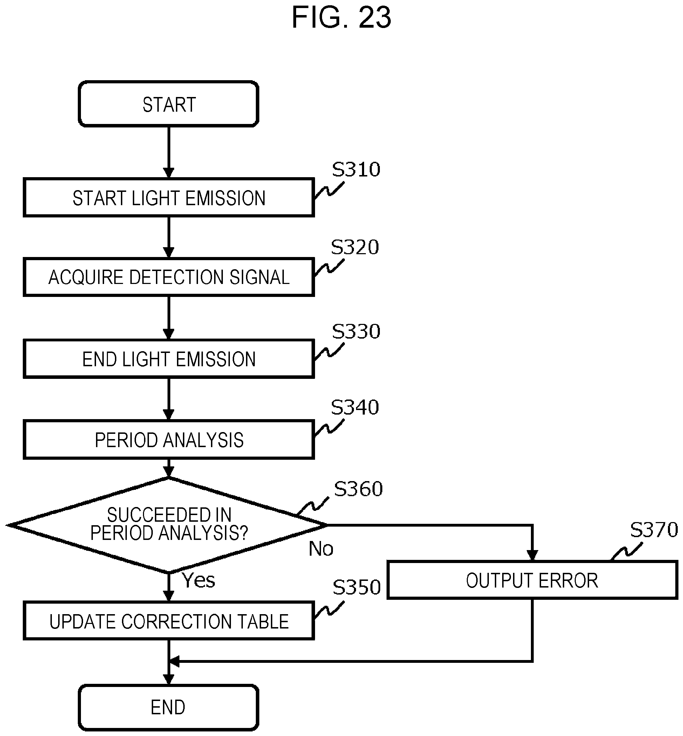

Fig. 23 is a flow chart showing a calibration operation of the measurement apparatus according to the present modification. The calibration operation of the present modification differs from the operation shown in Fig. 9 in that step S340 of conducting a frequency analysis is followed by step S360 of determining whether the frequency analysis has succeeded or failed. In a case where it has been determined in step S360 that the frequency analysis has succeeded ("Yes" in S360), the operation proceeds to step S350, in which the correction table is updated.

On the other hand, in a case where it has been determined in step S360 that the frequency analysis has failed ("No" in S360), the operation proceeds to step S370. A specific example of the case where it is determined in step S360 that the frequency analysis has failed is (1) a case where a variance of the periods Pi, Pᵢ₊₁, Pᵢ₊₂, ... detected in the period analysis conducted in step S340 exceeds a prescribed value or (2) a case where when a period analysis of a plurality of detection signals was conducted in step S340, a correlation between a period obtained by an analysis of each detection signal and the detection signal falls below a prescribed value. A case such as (1) and (2) is a situation where there are great variations in the period (peak interval) of detection signals and it is difficult to analyze a trend of period change. In step S370, a signal representing an error content is outputted to an external device such as the display device 210. The display device 210 carries out a display such as "CALIBRATION ERROR" or "ANALYSIS ERROR".

The calibration operation of the present modification makes it possible to prevent a correction table from being updated with wrong contents, thus making it possible to prevent deterioration in measurement precision of the measurement apparatus.

### (Fourth Modification)

A measurement apparatus according to a fourth modification of the embodiment of the present disclosure is described. The measurement apparatus of the present modification is identical in configuration to the measurement apparatus 100 of the aforementioned embodiment. Meanwhile, the measurement apparatus of the present modification differs in calibration operation from the aforementioned embodiment.

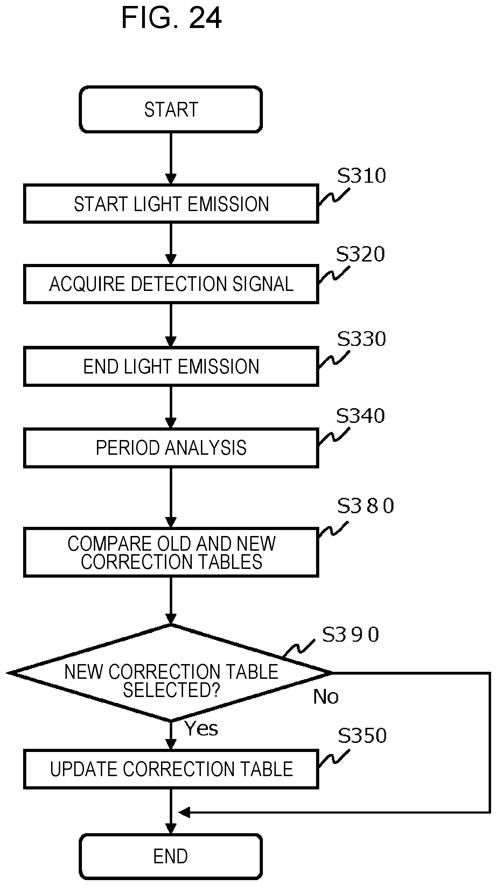

Fig. 24 is a flow chart showing a calibration operation of the measurement apparatus according to the present modification. The calibration operation of the present modification differs from the operation shown in Fig. 9 in that step S340 of conducting a frequency analysis is followed by step S380 of making a comparison between an old correction table created on the basis of the result of the previous period analysis and a new correction table created on the basis of the result of the latest period analysis. After that, in step S390, a determination as to whether to select the new correction table is made on the basis of the result of the comparison between the old and new correction tables in step S380. In a case where the new correction table is selected ("Yes" in S390), the operation proceeds to step S350, in which the old correction table is updated with the new correction table. In a case where the new correction table is not selected ("No" in S390), the operation ends without the correction table being updated.

The comparison between the old and new correction tables in step S380 is executed, for example, by making a comparison between the full widths at half maximum of frequency spectra obtained by performing correction processes on detection signals using the old and new correction tables.

In step S390, for example, in a case where as a result of the comparison in step S380, the full width at half maximum of the frequency spectrum of a detection signal subjected to a correction process with reference to the new correction table is smaller than the full width at half maximum of the frequency spectrum of a detection signal subjected to a correction process with reference to the old correction table, the new correction table is selected. Alternatively, the result of the comparison in step S380 may be displayed on the display device 210 so that the user may make a selection through interface input.

In each of the aforementioned embodiment and modifications of the present disclosure, deterioration of measurement precision due to the nonlinearity of laser light in frequency modulation can be reduced by making a correction to a detection signal yet to be subjected to a frequency analysis. A similar problem may be addressed by eliminating the nonlinearity by correcting a control signal per se to frequency-modulate the laser light. However, such a technique makes it necessary to nonlinearly correct a control signal to the light source. Whereas the generation of a nonlinear control signal and the control of a voltage or a current by the control signal are difficult, the correction to a detection signal yet to be subjected to a frequency analysis is easy and high in precision, as the correction is executed at a level of signal processing. Accordingly, the embodiment of the present disclosure makes it possible to carry out a measurement that is easier and higher in precision than has conventionally been the case.

### Industrial Applicability

A measurement apparatus in the present disclosure can be utilized for uses, for example, in a movable body such as an automated guided vehicle (AGV), an automobile, an unmanned aerial vehicle, or a mobile robot or in an FMCW LiDAR system that is mounted in monitoring equipment.

### Reference Signs List

100 ranging apparatus
110 light source
111 driving circuit
112 light-emitting element
120 interference optical system
121 divider
122 mirror
123 collimator
124 collimating lens
125 first fiber splitter
126 second fiber splitter
127 optical circulator
128 optical switch
129 divider
130 photodetector
140 processing circuit
150 storage device
160 temperature sensor
170 optical deflector
180 calibrating optical system
180A optical fiber
180B mirror
180C multipath cell
190 time counter
200 input device
210 display device
220 control device
300 physical object

## Claims

1. A measurement apparatus comprising:
a light source that emits frequency-modulated light;
a calibrating optical system having at least one reflecting surface;
an interference optical system that separates the light emitted from the light source into reference light and output light and generates first interfering light and second interfering light, the first interfering light being interfering light resulting from interference between reflected light produced by the output light being reflected off a physical object and the reference light, the second interfering light being interfering light resulting from interference between reflected light produced by the output light being reflected off the calibrating optical system and the reference light;
a photosensitive device that outputs a first detection signal corresponding to an intensity of the first interfering light and a second detection signal corresponding to an intensity of the second interfering light, the photosensitive device including at least one photodetector;
a storage device that stores correcting data for use in correction of the first detection signal; and
a processing circuit that sends out, to the light source, a control signal that sweeps a frequency of the light that is emitted from the light source, updates the correcting data on the basis of the second detection signal, corrects the first detection signal on the basis of the correcting data thus updated, generates measurement data on a distance to and/or a velocity of the physical object on the basis of the first detection signal thus corrected, and outputs the measurement data.

2. The measurement apparatus according to claim 1, wherein
the interference optical system includes an optical switch that switches between a first state in which to emit the output light to the physical object and a second state in which to emit the output light to the calibrating optical system,
the processing circuit operates in a measurement mode of measuring the distance to and/or the velocity of the physical object and a calibration mode of updating the correcting data,
in the measurement mode, the processing circuit puts the optical switch into the first state, corrects the first detection signal on the basis of the correcting data, and generates the measurement data on the basis of the first detection signal thus corrected, and
in the calibration mode, the processing circuit puts the optical switch into the second state and updates the correcting data on the basis of the second detection signal.

3. The measurement apparatus according to claim 2, further comprising a time counter that measures a duration of use of the light source,
wherein the processing circuit switches between the measurement mode and the calibration mode on the basis of the duration of use of the light source.

4. The measurement apparatus according to claim 2 or 3, further comprising a temperature sensor that measures a temperature of the light source,
wherein the processing circuit switches between the measurement mode and the calibration mode on the basis of the temperature of the light source.

5. The measurement apparatus according to any of claims 2 to 4, wherein the processing circuit switches between the measurement mode and the calibration mode in response to input from a user.

6. The measurement apparatus according to any of claims 2 to 5, wherein when, in the measurement mode, the processing circuit has changed an operating state of the light source by changing the control signal, the processing circuit switches to the calibration mode.

7. The measurement apparatus according to any of claims 1 to 6, wherein
the storage device further stores a reference distance corresponding to an optical path length of the calibrating optical system, and
the processing circuit updates the correcting data on the basis of the second detection signal and the reference distance.

8. The measurement apparatus according to claim 7, wherein
the measurement apparatus has a measurable distance range set therefor, and
the reference distance falls within the distance range.

9. The measurement apparatus according to any of claims 1 to 8, wherein the interference optical system includes an optical fiber, a mirror, or a multipath cell.

10. The measurement apparatus according to any of claims 1 to 9, wherein the correcting data contains information on correction values corresponding separately to each of a plurality of voltage values or a plurality of current values of the control signal.

11. The measurement apparatus according to any of claims 1 to 9, wherein the correcting data contains information on correction values corresponding separately to each of a plurality of phases or a plurality of timings of frequency modulation by the control signal.

12. The measurement apparatus according to any of claims 1 to 9, wherein the correcting data contains information on correction values for changing sampling timings at which the processing circuit samples the detection signals.

13. The measurement apparatus according to any of claims 1 to 12, wherein the correcting data represents a correction table or a correction function for determining correction values for use in correction of the detection signals.

14. The measurement apparatus according to claim 1, wherein the calibrating optical system is part of the interference optical system.

15. A method that is executed by a computer in a system including a measurement apparatus including a light source that emits periodically frequency-modulated light, a calibrating optical system having at least one reflecting surface, an interference optical system that separates the light emitted from the light source into reference light and output light and generates first interfering light and second interfering light, the first interfering light being interfering light resulting from interference between reflected light produced by the output light being reflected off a physical object and the reference light, the second interfering light being interfering light resulting from interference between reflected light produced by the output light being reflected off the calibrating optical system and the reference light, a photosensitive device that outputs a first detection signal corresponding to an intensity of the first interfering light and a second detection signal corresponding to an intensity of the second interfering light, the photosensitive device including at least one photodetector, and a storage device that stores correcting data for use in correction of the first detection signal, the method comprising:
updating the correcting data on the basis of the second detection signal;
correcting the first detection signal on the basis of the correcting data thus updated;
generating measurement data on a distance to and/or a velocity of the physical object on the basis of the first detection signal thus corrected; and
outputting the measurement data.

16. A computer program that is executed by a computer in a system including a measurement apparatus including a light source that emits periodically frequency-modulated light, a calibrating optical system having at least one reflecting surface, an interference optical system that separates the light emitted from the light source into reference light and output light and generates first interfering light and second interfering light, the first interfering light being interfering light resulting from interference between reflected light produced by the output light being reflected off a physical object and the reference light, the second interfering light being interfering light resulting from interference between reflected light produced by the output light being reflected off the calibrating optical system and the reference light, a photosensitive device that outputs a first detection signal corresponding to an intensity of the first interfering light and a second detection signal corresponding to an intensity of the second interfering light, the photosensitive device including at least one photodetector, and a storage device that stores correcting data for use in correction of the first detection signal, the computer program causing the computer to execute operations comprising:
updating the correcting data on the basis of the second detection signal;
correcting the first detection signal on the basis of the correcting data thus updated;
generating measurement data on a distance to and/or a velocity of the physical object on the basis of the first detection signal thus corrected; and
outputting the measurement data.
